# EUROPEAN PATENT SPECIFICATION

(11) **EP 3 392 318 B1**
(45) Date of publication and mention of the grant of the patent: **13.01.2021**
(21) Application number: 16875302.8
(22) Date of filing: 10.11.2016
(51) Int. Cl.: C09D 11/101, C09D 11/36, B41J 2/01, B41M 5/00, C09D 11/102, C09D 11/107

(54) **INK-JET PRINTER LIQUID COMPOSITION**
TINTENSTRAHLDRUCKER FLÜSSIGZUSAMMENSETZUNG
JET D'ENCRE COMPOSITION LIQUIDE

(30) Priority: 18.12.2015 JP 2015248005
(43) Date of publication of application: 24.10.2018
(73) Proprietor: FUJIFILM Corporation, Tokyo 106-8620 (JP)
(72) Inventor: UMEBAYASHI, Tsutomu, Ashigarakami-gun Kanagawa 258-8577 (JP)
(74) Representative: Klunker IP Patentanwälte PartG mbB
(86) International application number: PCT/JP2016/083423
(87) International publication number: WO 2017/104318

(56) References cited:
- WO-A1-2012/117944
- WO-A1-2017/104845
- WO-A1-2017/169371
- JP-A- 2002 249 682
- JP-A- 2008 133 335
- JP-A- 2012 025 910
- JP-A- 2014 019 751

## Description

### BACKGROUND OF THE INVENTION

### 1. Field of the Invention

The present invention relates to an ink-jet-printer liquid composition.

### 2. Description of the Related Art

The ink jet technique is a technique of ejecting an ink-jet-printer liquid composition (for example, ink) through an ink jet head of an ink jet printer (ink jet recording apparatus) to form images.

Regarding the ink jet technique, there are various known techniques.

For example, there is a known ink jet recording method that provides high color bleeding resistance and high feathering resistance for recording images, that provides glossiness equivalent to that provided by offset printing, that solves the bulge problem unique to line heads, and that provides high ejection stability and high productivity, the ink jet recording method including ejecting ink jet ink through an ink jet recording head to achieve recording on a recording medium, the ink jet ink at least containing a coloring agent and a polymer, the polymer having a hydrophilic main chain having a plurality of side chains, the polymer being cross-linkable between the side chains under irradiation with an active energy ray, the ink jet recording head having a line head form, the recording being performed while the relative humidity near the ink jet recording head is controlled to be 40%RH or more and 95%RH or less (for example, refer to JP2007-191701A).

There is also a known method for producing a building board having an image formed by ink jet printing, the building board having sufficiently high weather resistance for outdoor use, the method including (1) a step of subjecting a substrate having an undercoating to ink jet coating using a UV ink, (2) a step of, after the step (1), curing the UV ink with ultraviolet radiation, and (3) a step of, after the step (2), coating the ink-jet-coated surface with a clear coating, wherein the UV ink includes a photopolymerization initiator, a reactive oligomer and/or a reactive monomer, and a pigment, the curing ratio of the UV ink having been cured in the step (2) is 50 to 90%, and the clear coating includes a cross-linking component (for example, refer to JP2010-167334A).

There are also a known active-energy-ray-curable composition and a known active-energy-ray-curable ink composition that cure with high sensitivity in response to irradiation even with a low-power active energy ray, that cause less bleeding of surfactant, and that have high temporal stability, a known ink jet recording method employing the active-energy-ray-curable ink composition and known printed matter, the active-energy-ray-curable composition and the active-energy-ray-curable ink composition containing (A) a polymerizable compound having an ethylenically unsaturated bond and being substantially insoluble in water, (B) a surfactant having one or more groups selected from the group consisting of an acrylate group, a methacrylate group, an acrylamide group, and a methacrylamide group, (C) a polymerization initiator, and (D) water (for example, refer to JP2011-208088A).

There is also a known ink jet recording apparatus employing an image-forming technique using an ink jet recording ink that reacts in response to irradiation with radiation such as visible radiation, ultraviolet radiation, an electron beam, or infrared radiation to cure or thicken, the apparatus enabling no bleeding, high concentration, and high image quality, the ink jet recording apparatus having means for adjusting a surface profile after ejecting a radiation-curable ink including a radiation-curable compound through an ink head to form an image on a recording medium that substantially does not absorb the ink, and irradiating the ejected ink with radiation to cure or thicken (for example, refer to JP2003-276178A).

There is also a known ink jet ink providing high image evenness (reduced glossiness difference between an image region and a non-image region), high sharpness (edge sharpness), high bleeding resistance, and enhanced sticking resistance, the ink jet ink at least containing a coloring agent, water, and a polymer having a hydrophilic main chain having a plurality of side chains and being cross-linkable between the side chains in response to irradiation with an active energy ray, the ink having a surface tension of 19 mN/m or more and less than 35 mN/m (for example, refer to JP2007-45936A).

There is a proposed ink jet recording apparatus that enables avoidance of ink curing failure due to a difference in active energy absorbance between different inks and that provides preferred curing treatment, the apparatus including image-forming means that includes a nozzle array including a plurality of nozzles arranged and ejecting an ink curable in response to irradiation with an active ray, and that includes a plurality of nozzle arrays corresponding to a plurality of inks having a difference in curability; ejection control means for controlling ink ejection of the image-forming means for each of a plurality of segment units defined by dividing the nozzle arrays, such that inks individually ejected from the segment units form layers on a recording medium, and a plurality of layers formed of inks having been ejected from different segment units are stacked; and active-ray irradiation means for irradiating, with an active ray, the inks having been ejected to the recording medium (for example, refer to JP2012-101492A).

There is also a known ink that enables, with an ink jet printer, printing of fine images having high flatness without irregularities and having glossiness, the ink having a viscosity of 3 mPasec or more and 18 mPa·sec or less (room temperature: 25°C) and including n-hexane as a volatile organic solvent and a UV-curable ink at least including a pigment, an ultraviolet-curable resin being curable with ultraviolet radiation, and a photopolymerization initiator and having a viscosity of 20 mPa·sec or more (room temperature: 25°C) (for example, refer to JP2010-280828A).

There is also a known system that exhibits dry rub resistance and reduced dry rub transfer, the system being used for printing durable ink-jet-ink images having good rub resistance, the system including a) a substrate, b) a first ink jet pen containing an ink jet ink, the ink jet ink configured for being jetted onto the substrate, the ink jet ink including i) a first liquid vehicle and ii) an effective amount of a pigment coloring agent, and c) a slip component configured for being coated over the ink jet ink once jetted onto the substrate (for example, refer to JP2004-284362A).
JP 2008-133335 A discloses a photocurable ink jet ink which contains a copolymer of a radical-polymerizable monomer, for example a (meth)acrylic-modified polyorganosiloxane, and another radical-polymerizable monomer, and a compound having a double bond. The molecular weight of the copolymer preferably falls within the range of from 1,500 to 100,000.
JP 2014-019751 A discloses an active energy ray-curable ink jet ink which contains two or more types of polymerizable monomer and a photopolymerization initiator and which contains a non-plymerizable organic solvent at a quantity of 20 to 80 mass% relative to the overall ink quantity.
WO 2012/117944 A1 discloses an ink composition which contains a polymer having a weight average molecular weight of 3000 or more and having a group that contains a silsesquioxane structure, a monofunctional polymerizable compound and a polymerization initiator. Exemplary silsesquioxanes may be (meth)acrylic -modified, and contained in the ink composition in an amount of 5 mass%.

### SUMMARY OF THE INVENTION

In the ink jet technique, enhanced wear resistance of formed images is demanded in some cases. Examples of such cases where enhanced wear resistance of images is demanded include a case of performing decorative printing on soft substrates such as leather by the ink jet technique.

However, images formed by the ink jet techniques described in JP2007-191701A, JP2010-167334A, JP2011-208088A, JP2003-276178A, JP2007-45936A, JP2012-101492A, JP2010-280828A, and JP2004-284362A have insufficient wear resistance in some cases.

Studies performed by the inventor of the present invention have revealed that an ink-jet-printer liquid composition containing a polymerizable compound having a weight-average molecular weight of 1000 or more and 30000 or less and a specified (meth)acrylic-modified polyorganosiloxane enables enhanced wear resistance of images formed.

However, studies performed by the inventor of the present invention have also revealed that an ink-jet-printer liquid composition containing such components may cause degradation of stability of ejection through an ink jet head in some cases.

Under such circumstances, an aspect of the present invention has been made and an object is to provide an ink-jet-printer liquid composition that exhibits high stability of ejection through an ink jet head and enables formation of images having high wear resistance.

Means for achieving the object includes the following aspect.
<1> An ink-jet-printer liquid composition containing an organic solvent; a polymerizable compound having a weight-average molecular weight of from 1000 to 30000; a (meth)acrylic-modified polyorganosiloxane that has no polymerizable groups, that is a copolymer of a (meth)acrylate and a reactive polysiloxane having at least one of a polymerizable group or a mercapto group, and that has a weight-average molecular weight of from 20000 to 400000; and a photopolymerization initiator,
   wherein a content of the organic solvent relative to a total amount of the liquid composition is from 40 mass% to 80 mass%, and
   a content of the (meth)acrylic-modified polyorganosiloxane relative to the total amount of the liquid composition is from 0.1 mass% to 5.0 mass%.
<2> The ink-jet-printer liquid composition according to <1>, wherein the polymerizable compound is a bifunctional acrylate compound.
<3> The ink-jet-printer liquid composition according to <1> or <2>, wherein a content of the polymerizable compound relative to the total amount of the liquid composition is from 5 mass% to 40 mass%.
<4> The ink-jet-printer liquid composition according to any one of <1> to <3>, further including particles formed of the (meth)acrylic-modified polyorganosiloxane, wherein the particles have a volume-average primary particle diameter of from 0.01 µm to 0.3 µm.
<5> The ink-jet-printer liquid composition according to any one of <1> to <4>, wherein the reactive polysiloxane is at least one compound represented by Formula (I) below. 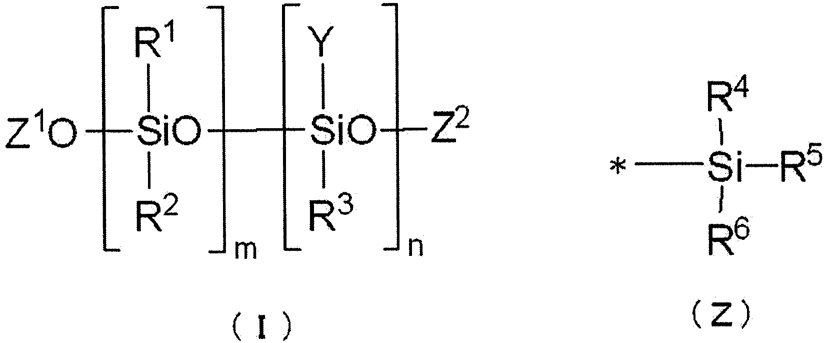 In Formula (I), R¹, R², and R³ each independently represent a hydrocarbon group having 1 to 20 carbon atoms, a halogenated hydrocarbon group having 1 to 20 carbon atoms, or a hydrocarbonoxy group having 1 to 20 carbon atoms, Y represents an organic group having at least one of a polymerizable group or a mercapto group, Z¹ and Z² each independently represent a hydrogen atom, an alkyl group having 1 to 10 carbon atoms, or a group represented by Formula (Z), m represents an integer of 1 to 10000, and n represents an integer of 1 or more, and
   in Formula (Z), R⁴ and R⁵ each independently represent a hydrocarbon group having 1 to 20 carbon atoms, a halogenated hydrocarbon group having 1 to 20 carbon atoms, or a hydrocarbonoxy group having 1 to 20 carbon atoms, R⁶ represents a hydrocarbon group having 1 to 20 carbon atoms, a halogenated hydrocarbon group having 1 to 20 carbon atoms, a hydrocarbonoxy group having 1 to 20 carbon atoms, or an organic group having at least one of a polymerizable group or a mercapto group, and* represents a point of attachment.
<6> The ink-jet-printer liquid composition according to <5>, wherein Y in Formula (I) represents a mercaptoalkyl group having 1 to 20 carbon atoms, and
   R⁶ in Formula (Z) represents a hydrocarbon group having 1 to 20 carbon atoms, a halogenated hydrocarbon group having 1 to 20 carbon atoms, a hydrocarbonoxy group having 1 to 20 carbon atoms, or a mercaptoalkyl group having 1 to 20 carbon atoms.
<7> The ink-jet-printer liquid composition according to any one of <1> to <6>, wherein the (meth)acrylate is at least one compound represented by Formula (II) below.

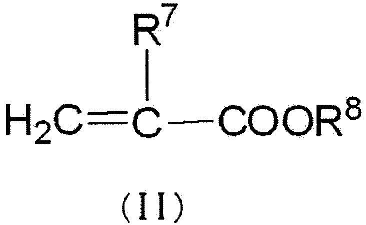

In Formula (II), R⁷ represents a hydrogen atom or a methyl group, R⁸ represents an alkyl group having 1 to 20 carbon atoms, an alkoxyalkyl group having 2 to 20 carbon atoms, a hydroxyalkyl group having 1 to 20 carbon atoms, a cycloalkyl group having 3 to 20 carbon atoms, or an aryl group having 6 to 20 carbon atoms.

An aspect of the present invention provides an ink-jet-printer liquid composition that exhibits high stability of ejection through an ink jet head, and enables formation of images having high wear resistance.

### DESCRIPTION OF THE PREFERRED EMBODIMENTS

Hereinafter, specific embodiments according to the present invention will be described in detail. However, the present invention is not limited at all to the following embodiments.

In this Specification, ranges defined by a value "to" a value include these values as the lower limit value and the upper limit value.

In this Specification, the amount of each component in a composition means, when the composition contains a plurality of substances belonging to such a component, the total amount of the plurality of substances in the composition unless otherwise specified.

In this Specification, the term "step" includes not only an independent step but also a step that is not clearly distinguished from another step but that achieves the intended result of the step.

In this Specification, "light" is a concept that encompasses active energy rays such as γ-rays, β-rays, electron beams, ultraviolet radiation, visible radiation, and infrared radiation.

In this Specification, ultraviolet radiation is also referred to as "UV (Ultra Violet)".

In this Specification, "(meth)acrylic" is a concept that encompasses both of acrylic and methacrylic; "(meth)acrylate" is a concept that encompasses both of acrylate and methacrylate; and "(meth)acryloyl group" is a concept that encompasses both of an acryloyl group and a methacryloyl group.

### Ink-jet-printer liquid composition

An ink-jet-printer liquid composition (hereafter, also simply referred to as "liquid composition") according to the present disclosure contains an organic solvent; a polymerizable compound having a weight-average molecular weight of 1000 or more and 30000 or less; a (meth)acrylic-modified polyorganosiloxane (hereafter, also referred to as "specified (meth)acrylic-modified polyorganosiloxane") that has no polymerizable groups, that is a copolymer of a (meth)acrylate and a reactive polysiloxane having at least one of a polymerizable group or a mercapto group, and that has a weight-average molecular weight of 20000 or more and 400000 or less; and a photopolymerization initiator, wherein the content of the organic solvent relative to the total amount of the liquid composition is 40 mass% or more and 80 mass% or less, and the content of the specified (meth)acrylic-modified polyorganosiloxane relative to the total amount of the liquid composition is 0.1 mass% or more and 5.0 mass% or less.

The liquid composition according to the present disclosure exhibits high stability of ejection through an ink jet head (hereafter, also referred to as "IJ ejection stability") and enables formation of images having high wear resistance.

The probable reasons why the liquid composition according to the present disclosure provides the effect of enhancing the wear resistance of images are as follows.

One of the probable reasons for achieving enhancement of the wear resistance of images is that the images formed are cured with light. Specifically, the liquid composition according to the present disclosure contains the polymerizable compound and the photopolymerization initiator, so that, when the liquid composition according to the present disclosure is used to form images, the images having been formed can be cured with light.

Another one of the probable reasons for achieving enhancement of the wear resistance of images is that the polyorganosiloxane skeleton in the specified (meth)acrylic-modified polyorganosiloxane imparts lubricity to images.

Another one of the probable reasons for achieving enhancement of the wear resistance of images is as follows. Specifically, the specified (meth)acrylic-modified polyorganosiloxane, which is a copolymer of reactive polysiloxane and (meth)acrylate, has, in the molecule, a polymer chain of the (meth)acrylate (hereafter, also referred to as "(meth)acrylic chain"). In images formed from the liquid composition according to the present disclosure, the polyorganosiloxane skeleton of the specified (meth)acrylic-modified polyorganosiloxane tends to be present not only in the surfaces of the images but also within the images due to the effect of the (meth)acrylic chain. Thus, even when the surface of such an image wears down and a new surface appears, the new surface has the polyorganosiloxane skeleton. Thus, even when the image is repeatedly subjected to minor wearing, the polyorganosiloxane skeleton continuously provides the effect of enhancing wear resistance, which probably results in maintaining of high wear resistance of the image.

The probable reason why the liquid composition according to the present disclosure exhibits high IJ ejection stability is as follows.

In general, when a liquid composition contains a (meth)acrylic-modified polyorganosiloxane having a weight-average molecular weight (hereafter, also referred to as "Mw") of 20000 or more and a polymerizable compound having an Mw of 1000 or more, the liquid composition probably tends to have an increased viscosity.

However, in the liquid composition according to the present disclosure, the organic solvent content of 40 mass% or more, the specified (meth)acrylic-modified polyorganosiloxane content of 5.0 mass% or less, the specified (meth)acrylic-modified polyorganosiloxane having an Mw of 400000 or less, and the polymerizable compound having an Mw of 30000 or less probably enable suppression of an increase in the viscosity of the liquid composition. This probably enables maintaining of the high IJ ejection stability of the liquid composition.

For the above-described reasons, the liquid composition according to the present disclosure probably exhibits high stability of ejection through an ink jet head (hereafter, also referred to as "IJ ejection stability"), and enables formation of images having high wear resistance.

Incidentally, in this Specification, the weight-average molecular weight means a value measured by gel permeation chromatography (GPC).

The GPC is performed with an HLC-8020GPC (manufactured by Tosoh Corporation), three columns of TSKgel (registered trademark) Super Multipore HZ-H (manufactured by Tosoh Corporation, 4.6 mm ID × 15 cm), and an eluent that is THF (tetrahydrofuran).

The GPC is performed at a sample concentration of 0.45 mass%, at a flow rate of 0.35 ml/min, with a sample injection amount of 10 µl, at a measurement temperature of 40°C, and with a differential refractive index (RI) detector.

The calibration curve is created with "standard samples TSK standard, polystyrene" manufactured by Tosoh Corporation: 8 samples of "F-40", "F-20", "F-4", "F-1", "A-5000", "A-2500", "A-1000", and "n-propylbenzene".

Images formed from the liquid composition according to the present disclosure also have high bendability.

Herein, the bendability of an image means, when a recording medium (such as a substrate) having the image is bent, the degree to which the image follows the bending of the recording medium. When the image has poor bendability, the image on the recording medium (such as a substrate) being bent cannot follow the bending of the recording medium, which tends to result in cracking of the image. In particular, such cracking of an image tends to occur in photocured images.

The probable reason why images formed from the liquid composition according to the present disclosure have high bendability is that the polymerizable compound has an Mw of 1000 or more. Specifically, when an image formed from a liquid composition containing a polymerizable compound is cured with light, during photocuring of the image, polymerization and cross-linking of the polymerizable compound proceed in the image. When the polymerizable compound is a polymerizable compound having an Mw of 1000 or more, the distance between cross-linking points probably increases, which probably results in enhancement of the bendability of the image. In other words, even when the substrate having the image is bent, the image readily follows the bending of the substrate and the image is less likely to crack. Probably for this reason, images formed from the liquid composition according to the present disclosure have high bendability.

The liquid composition according to the present disclosure enables formation of images having high wear resistance and high bendability, and hence is particularly suitable for ink jet recording on soft substrates (such as leather) serving as recording media (for example, decorative printing).

The polymerizable compound is preferably a bifunctional acrylate compound from the viewpoint of further enhancing bendability of images.

In particular, preferred is a bifunctional urethane acrylate compound.

The content of the polymerizable compound relative to the total amount of the liquid composition is preferably 5 mass% or more and 40 mass% or less.

When the content of the polymerizable compound is 5 mass% or more, images have further enhanced wear resistance. More preferably, the content of the polymerizable compound is 10 mass% or more from the viewpoint of further enhancing wear resistance of images.

When the content of the polymerizable compound is 40 mass% or less, the liquid composition has further enhanced IJ ejection stability. More preferably, from the viewpoint of further enhancing the IJ ejection stability of the liquid composition, the content of the polymerizable compound is 30 mass% or less, particularly preferably 25 mass% or less.

Incidentally, when the liquid composition contains, as the polymerizable compound, a bifunctional acrylate compound, the preferred range of the content of the bifunctional acrylate compound is also the same as the preferred range of the content of the polymerizable compound.

From the viewpoint of further enhancing the wear resistance of images, the liquid composition preferably contains particles formed of the specified (meth)acrylic-modified polyorganosiloxane. In other words, the specified (meth)acrylic-modified polyorganosiloxane contained in the liquid composition preferably has the form of particles.

The particles preferably have a volume-average primary particle diameter (hereafter, also referred to as "particle diameter") of 0.01 µm or more and 0.3 µm or less.

When the particles have a particle diameter of 0.01 µm or more, the images have further enhanced wear resistance. The particles preferably have a particle diameter of 0.05 µm or more, more preferably 0.1 µm or more, particularly preferably 0.15 µm or more.

When the particles have a particle diameter of 0.3 µm or less, the liquid composition has further enhanced IJ ejection stability. More preferably, the particles have a particle diameter of 0.25 µm or less.

In this Specification, the volume-average primary particle diameter (particle diameter) means a value measured with a laser diffraction-scattering particle size distribution analyzer and with tripropylene glycol methyl ether serving as a measurement medium.

The liquid composition may further contain a coloring agent.

Such an embodiment in which the liquid composition contains a coloring agent is suitable for a case where the liquid composition is used as a color ink.

In this case, the coloring agent content is preferably 0.1 mass% or more.

The embodiment in which the liquid composition contains a coloring agent (color ink) enables formation of color images having high wear resistance.

The liquid composition is also preferably used as a colorless ink substantially not containing coloring agents.

In this Specification, "substantially not containing coloring agents" means that the coloring agent content relative to the total amount of the liquid composition is less than 0.1 mass%.

In this Specification, "colorless" means substantially colorless.

Such an embodiment in which the liquid composition substantially does not contain coloring agents (colorless ink) enables formation of colorless images having high wear resistance.

An example of the colorless ink is a topcoat liquid for forming a colorless coating film (hereafter, also referred to as a "topcoat film") over a color image formed from a color ink. A topcoat liquid that is a liquid composition according to the present disclosure enables formation of a topcoat film having high wear resistance. Such a topcoat film having high wear resistance is used to cover a color image, to thereby enhance the wear resistance of the color image (specifically, the topcoat-film-equipped color image). In this case, the color image to be covered with the topcoat film may be formed from a publicly known color ink, or may be formed from a liquid composition containing a coloring agent according to an embodiment of the present disclosure.

Hereinafter, the liquid composition according to the present disclosure will be further described in terms of preferred embodiments.

### Specified (meth)acrylic-modified polyorganosiloxane

The liquid composition according to the present disclosure contains, as the specified (meth)acrylic-modified polyorganosiloxane, at least one (meth)acrylic-modified polyorganosiloxane that has no polymerizable groups, that is a copolymer of at least one (meth)acrylate and at least one reactive polysiloxane having at least one of a polymerizable group or a mercapto group (hereafter, also referred to as the "specified reactive polysiloxane"), and that has a weight-average molecular weight (Mw) of 20000 or more and 400000 or less.

The specified (meth)acrylic-modified polyorganosiloxane has a weight-average molecular weight (Mw) of 20000 or more and 400000 or less.

In the present disclosure, the specified (meth)acrylic-modified polyorganosiloxane has an Mw of 20000 or more, so that the images have enhanced wear resistance. More preferably, from the viewpoint of the wear resistance of images, the specified (meth)acrylic-modified polyorganosiloxane has an Mw of 30000 or more, particularly preferably 50000 or more.

In the present disclosure, the specified (meth)acrylic-modified polyorganosiloxane has an Mw of 400000 or less, so that the liquid composition has further enhanced IJ ejection stability. More preferably, from the viewpoint of the IJ ejection stability, the specified (meth)acrylic-modified polyorganosiloxane has an Mw of 300000 or less, particularly preferably 200000 or less.

The specified (meth)acrylic-modified polyorganosiloxane is particularly preferably a graft copolymer of a specified reactive polysiloxane and a (meth)acrylate.

In the liquid composition according to the present disclosure, the content of the specified (meth)acrylic-modified polyorganosiloxane (in the case of two or more species, the total content thereof. Hereafter, this is the same.) is, as described above, 0.1 mass% or more and 5.0 mass% or less.

The content is 0.1 mass% or more, so that the images have enhanced wear resistance. Preferably, from the viewpoint of further enhancing the wear resistance of images, the content is 0.2 mass% or more, more preferably 0.5 mass% or more.

The content is 5.0 mass% or less, so that the liquid composition has enhanced IJ ejection stability. Preferably, from the viewpoint of further enhancing the IJ ejection stability of the liquid composition, the content is 4.0 mass% or less, more preferably 3.0 mass% or less.

In the specified (meth)acrylic-modified polyorganosiloxane, the copolymerization mass ratio [(meth)acrylate/specified reactive polysiloxane] of the (meth)acrylate to the specified reactive polysiloxane is preferably 0.5 to 10.0, more preferably 1.0 to 5.0, still more preferably 2.0 to 4.0, particularly preferably 2.0 to 3.0.

The specified reactive polysiloxane (specifically, a reactive polysiloxane having at least one of a polymerizable group or a mercapto group) for forming the specified (meth)acrylic-modified polyorganosiloxane may be a single species or two or more species.

The specified reactive polysiloxane is preferably at least one compound represented by the following Formula (I).

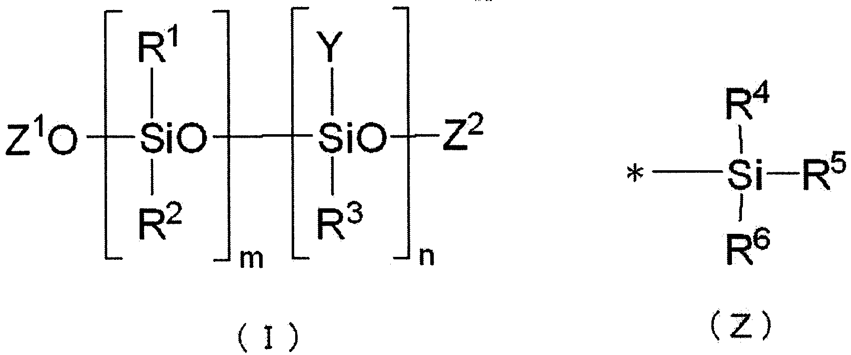

In Formula (I), R¹, R², and R³ each independently represent a hydrocarbon group having 1 to 20 carbon atoms, a halogenated hydrocarbon group having 1 to 20 carbon atoms, or a hydrocarbonoxy group having 1 to 20 carbon atoms, Y represents an organic group having at least one of a polymerizable group or a mercapto group, Z¹ and Z² each independently represent a hydrogen atom, an alkyl group having 1 to 10 carbon atoms, or a group represented by Formula (Z), m represents an integer of 1 to 10000, and n represents an integer of 1 or more.

In Formula (Z), R⁴ and R⁵ each independently represent a hydrocarbon group having 1 to 20 carbon atoms, a halogenated hydrocarbon group having 1 to 20 carbon atoms, or a hydrocarbonoxy group having 1 to 20 carbon atoms, R⁶ represents a hydrocarbon group having 1 to 20 carbon atoms, a halogenated hydrocarbon group having 1 to 20 carbon atoms, a hydrocarbonoxy group having 1 to 20 carbon atoms, or an organic group having at least one of a polymerizable group or a mercapto group, and * represents a point of attachment.

In Formula (I) and Formula (Z), in R¹ to R⁶, the number of carbon atoms of the hydrocarbon group having 1 to 20 carbon atoms is preferably 1 to 10, more preferably 1 to 6. The hydrocarbon group may be a linear hydrocarbon group, a branched hydrocarbon group, or a cyclic hydrocarbon group. The hydrocarbon group is preferably an aliphatic hydrocarbon group, more preferably an alkyl group.

In Formula (I) and Formula (Z), in R¹ to R⁶, preferred examples of the halogenated hydrocarbon group having 1 to 20 carbon atoms are the same as the preferred examples of the hydrocarbon group having 1 to 20 carbon atoms in R¹ to R⁶ except that the group is substituted by at least one halogen atom.

The halogen atom is preferably a fluorine atom, a chlorine atom, a bromine atom, or an iodine atom, more preferably a fluorine atom, a chlorine atom, or a bromine atom, particularly preferably a fluorine atom or a chlorine atom.

In Formula (I) and Formula (Z), in R¹ to R⁶, the number of carbon atoms in the hydrocarbonoxy group having 1 to 20 carbon atoms is preferably 1 to 10, more preferably 1 to 6. The hydrocarbonoxy group may be a linear hydrocarbonoxy group, a branched hydrocarbonoxy group, or a cyclic hydrocarbonoxy group. The hydrocarbonoxy group is preferably an aliphatic hydrocarbonoxy group, more preferably an alkoxy group.

In Formula (I) and Formula (Z), in Y and R⁶, the polymerizable group is preferably a group including an ethylenic double bond, more preferably a group including at least one of a vinyl group and a 1-methylvinyl group.

Particularly preferably, the polymerizable group is a (meth)acryloyl group from the viewpoint of polymerization reactivity and hardness of the film to be formed.

In Formula (I) and Formula (Z), in Y and R⁶, the number of carbon atoms of the organic group having at least one of a polymerizable group or a mercapto group is preferably 1 to 20, more preferably 1 to 10, particularly preferably 1 to 6.

In Y and R⁶, the organic group having at least one of a polymerizable group and a mercapto group is particularly preferably a mercaptoalkyl group having 1 to 20 carbon atoms.

In Formula (I), m represents an integer of 1 to 10000; preferably m represents an integer of 2 to 1000, more preferably an integer of 3 to 500, particularly preferably an integer of 5 to 100.

In Formula (I), n represents an integer of 1 or more; preferably n represents an integer of 2 to 1000, more preferably an integer of 3 to 500, particularly preferably an integer of 5 to 100.

However, m and n in Formula (I) may be appropriately adjusted such that the specified (meth)acrylic-modified polyorganosiloxane has an Mw of 20000 or more and 400000 or less.

In Formula (I), the ratio of m to n [m/n] is preferably 1 to 10000, more preferably 1 to 1000, particularly preferably 1 to 100.

When a mixture of two or more compounds represented by Formula (I) is used to form the specified (meth)acrylic-modified polyorganosiloxane, the ratio of m to n [m/n] in the whole mixture is also preferably 1 to 10000, more preferably 1 to 1000, particularly preferably 1 to 100.

The compound represented by Formula (I) is particularly preferably a compound in which Y in Formula (I) is a mercaptoalkyl group having 1 to 20 carbon atoms (more preferably 1 to 10, still more preferably 1 to 3), and R⁶ in Formula (Z) is a hydrocarbon group having 1 to 20 carbon atoms (more preferably 1 to 10, still more preferably 1 to 3), a halogenated hydrocarbon group having 1 to 20 carbon atoms (more preferably 1 to 10, still more preferably 1 to 3), a hydrocarbonoxy group having 1 to 20 carbon atoms (more preferably 1 to 10, still more preferably 1 to 3), or a mercaptoalkyl group having 1 to 20 carbon atoms (more preferably 1 to 10, still more preferably 1 to 3).

The (meth)acrylate used for forming the specified (meth)acrylic-modified polyorganosiloxane may be a single species or two or more species.

The (meth)acrylate is preferably at least one compound represented by the following Formula (II).

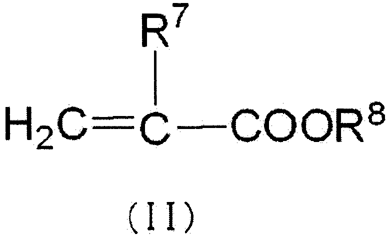

In Formula (II), R⁷ represents a hydrogen atom or a methyl group, and R⁸ represents an alkyl group having 1 to 20 carbon atoms, an alkoxyalkyl group having 2 to 20 carbon atoms, a hydroxyalkyl group having 1 to 20 carbon atoms, a cycloalkyl group having 3 to 20 carbon atoms, or an aryl group having 6 to 20 carbon atoms.

In Formula (II), in R⁸, the alkyl group having 1 to 20 carbon atoms may be a linear alkyl group or a branched alkyl group.

The alkyl group having 1 to 20 carbon atoms at least has 1 to 20 carbon atoms and may be an unsubstituted linear alkyl group or branched alkyl group, or a cycloalkyl-group-substituted linear alkyl group or branched alkyl group, or an aryl-group-substituted linear alkyl group or branched alkyl group (namely, an aralkyl group).

The number of carbon atoms of the alkyl group having 1 to 20 carbon atoms is preferably 1 to 12, more preferably 1 to 10, particularly preferably 1 to 6.

In Formula (II), in R⁸, the alkoxyalkyl group having 2 to 20 carbon atoms has the same definition and the same preferred examples as in the alkyl group having 1 to 20 carbon atoms in R⁸ in Formula (II) except that the alkoxyalkyl group as a whole has a total number of carbon atoms of 2 to 20 and is an alkoxy-group-substituted group.

The number of carbon atoms of the alkoxyalkyl group having 2 to 20 carbon atoms (the total number of carbon atoms of the alkoxyalkyl group as a whole) is preferably 2 to 12, more preferably 2 to 10, particularly preferably 2 to 6.

In Formula (II), in R⁸, the hydroxyalkyl group having 1 to 20 carbon atoms has the same definition and the same preferred examples as in the alkyl group having 1 to 20 carbon atoms in R⁸ in Formula (II) except that it is a hydroxy-group-substituted group.

In Formula (II), in R⁸, the cycloalkyl group having 3 to 20 carbon atoms may be an unsubstituted cycloalkyl group, or a cycloalkyl group substituted by a linear alkyl group or a branched alkyl group.

The number of carbon atoms of the cycloalkyl group having 3 to 20 carbon atoms is preferably 3 to 12, more preferably 3 to 10, particularly preferably 3 to 6.

In Formula (II), in R⁸, the aryl group having 6 to 20 carbon atoms may be an unsubstituted aryl group or an alkyl-group-substituted aryl group.

The number of carbon atoms of the aryl group having 6 to 20 carbon atoms is preferably 6 to 12.

The liquid composition according to the present disclosure may contain a polyorganosiloxane other than the specified (meth)acrylic-modified polyorganosiloxane without causing degradation of the advantages of the liquid composition according to the present disclosure.

For example, the liquid composition according to the present disclosure may contain a (meth)acrylic-modified polyorganosiloxane having a polymerizable group. The (meth)acrylic-modified polyorganosiloxane having a polymerizable group is classified as a specified polymerizable compound described below or another polymerizable compound described below.

### Organic solvent

The liquid composition according to the present disclosure contains at least one organic solvent.

In the liquid composition according to the present disclosure, the organic solvent content relative to the total amount of liquid composition is, as described above, 40 mass% or more and 80 mass% or less.

The organic solvent content is 40 mass% or more, so that the liquid composition has enhanced IJ ejection stability. More preferably, from the viewpoint of further enhancing the IJ ejection stability of the liquid composition, the organic solvent content is 50 mass% or more, particularly preferably 60 mass% or more.

On the other hand, the organic solvent content is 80 mass% or less, so that the images have enhanced wear resistance.

The organic solvent is not particularly limited and may be freely selected from organic solvents ordinarily used in printing industry.

Examples of the organic solvent include glycol ether, glycol ether ester, alcohol, ketone, ester, and pyrrolidone.

Examples of the glycol ether include ethylene glycol monomethyl ether, diethylene glycol diethyl ether, and triethylene glycol monobutyl ether.

Examples of the ketone include methyl ethyl ketone.

Examples of the ester include 3-methoxybutyl acetate and γ-butyrolactone.

Examples of the pyrrolidone include N-methyl-2-pyrrolidone.

In particular, preferred are diethylene glycol diethyl ether, ethylene glycol monomethyl ether, 3-methoxybutyl acetate, and γ-butyrolactone.

The organic solvent preferably has a boiling point of 75°C or more and 300°C or less, more preferably 100°C or more and 250°C or less, still more preferably 150°C or more and 250°C or less, particularly preferably 150°C or more and 200°C or less.

When the organic solvent has a boiling point of 75°C or more, the images have further enhanced adhesion. On the other hand, when the boiling point is 300°C or less, the images have further suppressed bleeding.
Polymerizable compound having weight-average molecular weight of 1000 or more and 30000 or less

The liquid composition according to the present disclosure contains at least one polymerizable compound having a weight-average molecular weight of 1000 or more and 30000 or less (hereafter, also referred to as the "specified polymerizable compound").

The preferred range of the content of the specified polymerizable compound in the liquid composition is described above.

The "polymerizable compound" means a compound having a polymerizable group.

The polymerizable group may be a radical polymerizable group or a cationic polymerizable group, and is preferably a radical polymerizable group.

The radical polymerizable group is preferably a group including an ethylenic double bond, more preferably a group including at least one of a vinyl group and a 1-methylvinyl group, particularly preferably a (meth)acryloyl group.

The cationic polymerizable group may be an epoxy group.

The specified polymerizable compound has a weight-average molecular weight of 1000 or more and 30000 or less.

The specified polymerizable compound has a weight-average molecular weight of 1000 or more, so that the images have enhanced bendability.

The specified polymerizable compound has a weight-average molecular weight of 30000 or less, so that the IJ ejection stability is enhanced and the images have enhanced wear resistance.

The specified polymerizable compound preferably has a weight-average molecular weight of 1000 or more and 20000 or less, more preferably 1000 or more and 15000 or less, still more preferably 1000 or more and 10000 or less, particularly preferably 1500 or more and 10000 or less.

The specified polymerizable compound may be a bifunctional to hexafunctional polymerizable compound.

Herein, the "bifunctional to hexafunctional polymerizable compound" is a compound having two to six polymerizable groups in a single molecule.

Preferably, from the viewpoint of further enhancing the bendability of images, the specified polymerizable compound is a bifunctional to tetrafunctional polymerizable compound, more preferably a bifunctional to trifunctional polymerizable compound, particularly preferably a bifunctional polymerizable compound.

The specified polymerizable compound is preferably acrylate compounds such as urethane acrylate, bisphenol A epoxy acrylate, and epoxy novolac acrylate, particularly preferably urethane acrylate.

### Another polymerizable compound

The liquid composition according to the present disclosure may contain, without causing degradation of advantages of the liquid composition according to the present disclosure, another polymerizable compound different from the specified polymerizable compounds, specifically, at least one of a polymerizable compound having a weight-average molecular weight of less than 1000 (hereafter, also referred to as a "polymerizable monomer" or a "monomer") and a polymerizable compound having a weight-average molecular weight of more than 30000.

Examples of the polymerizable monomer include
monofunctional (meth)acrylate monomers such as phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA), and lauryl acrylate;
polyfunctional (meth)acrylate monomers such as hexanediol diacrylate, trimethylolpropane triacrylate, pentaerythritol triacrylate, polyethylene glycol diacrylate (such as tetraethylene glycol diacrylate), dipropylene glycol diacrylate, tri(propylene glycol) triacrylate, neopentyl glycol diacrylate, bis(pentaerythritol) hexaacrylate, ethoxylated or propoxylated glycol diacrylate (such as propoxylated neopentyl glycol diacrylate), ethoxylated or propoxylated polyol polyacrylate (such as ethoxylated trimethylolpropane triacrylate), and a mixture of ethoxylated or propoxylated glycol diacrylate and ethoxylated or propoxylated polyol polyacrylate;
vinyl ether monomers such as triethylene glycol divinyl ether, diethylene glycol divinyl ether, 1,4-cyclohexanedimethanol divinyl ether, and ethylene glycol monovinyl ether;
N-vinylamide such as N-vinyl caprolactam (NVC) and N-vinylpyrrolidone (NVP); and
N-(meth)acryloylamine such as N-acryloylmorpholine (ACMO).

Note that, from the viewpoint of further enhancing the bendability of images, in the liquid composition according to the present disclosure, the polymerizable monomer content relative to the total amount of the liquid composition is preferably 20 mass% or less, more preferably 10 mass% or less, still more preferably 5 mass% or less, particularly preferably 1 mass% or less. In the liquid composition according to the present disclosure, the polymerizable monomer content may be 0 mass% (in other words, the liquid composition according to the present disclosure may contain no polymerizable monomer).

From the same viewpoint (specifically, from the viewpoint of further enhancing the bendability of images), the ratio of the specified polymerizable compound relative to the total amount of the polymerizable compound contained in the liquid composition according to the present disclosure is preferably 50 mass% or more, more preferably 60 mass% or more, still more preferably 80 mass% or more, particularly preferably 90 mass% or more. The ratio of the specified polymerizable compound relative to the total amount of the polymerizable compound contained in the liquid composition according to the present disclosure may be 100 mass%.

### Photopolymerization initiator

The liquid composition according to the present disclosure contains at least one photopolymerization initiator.

Examples of the photopolymerization initiator include radical photopolymerization initiators such as benzophenone, 1-hydroxycyclohexyl phenyl ketone, 1-[4-(2-hydroxyethoxy)-phenyl]-2-hydroxy-2-methyl-1-propan-1-one, 2-benzyl-2-dimethylamino-(4-morpholinophenyl)butan-1-one, isopropyl thioxanthone, benzyl dimethyl ketal, bis(2,4,6-trimethylbenzoyl)-phenylphosphine oxide, and bis(2,6-dimethylbenzoyl)-2,4,4-trimethylpentyl phosphine oxide.

These radical photopolymerization initiators are publicly known. Examples of commercially available products of these radical photopolymerization initiators include IRGACURE (registered trademark), Darocur (registered trademark), and LUCIRIN (registered trademark) (all manufactured by BASF).

When the specified polymerizable compound is a compound having a cationic polymerizable group, the photopolymerization initiator may be a cationic photopolymerization initiator. The cationic photopolymerization initiator may be, for example, a sulfonium- or iodonium-based photopolymerization initiator. Examples of commercially available products of the sulfonium- or iodonium-based photopolymerization initiator include Rhodorsil PI 2074 from Rhodia; MC AA, MC BB, MC CC, MC CC PF, and MC SD from Siber Hegner; UV9380c from Alfa Chemicals; Uvacure 1590 from UCB Chemicals; and Esacure 1064 from Lamberti spa.

In the liquid composition according to the present disclosure, the photopolymerization initiator content relative to the total amount of the liquid composition is preferably 1 mass% to 20 mass%, more preferably 4 mass% to 10 mass%.

### Coloring agent

The liquid composition according to the present disclosure may contain at least one coloring agent.

As described above, an embodiment in which the liquid composition contains a coloring agent is suitable for a case where the liquid composition is used as a color ink.

When the liquid composition according to the present disclosure contains a coloring agent, the coloring agent content relative to the total amount of the liquid composition is preferably 0.1 mass% or more, more preferably 0.5 mass% or more, particularly preferably 1 mass% or more.

When the liquid composition according to the present disclosure contains a coloring agent, the upper limit of the coloring agent content relative to the total amount of the liquid composition is preferably 20 mass%, more preferably 10 mass%, still more preferably 8 mass%, particularly preferably 5 mass%.

The coloring agent is not particularly limited and may be pigment or dye.

The pigment is not particularly limited and can be appropriately selected in accordance with the purpose. The pigment can be dissolved or dispersed in the liquid composition.

The pigment may be an organic pigment or an inorganic pigment, or may be a combination of an organic pigment and an inorganic pigment.

Examples of the organic pigment include azo lakes, azo pigments, polycyclic pigments such as phthalocyanine pigments, perylene pigments, perinone pigments, anthraquinone pigments, quinacridone pigments, dioxazine pigments, diketopyrrolopyrrole pigments, thioindigo pigments, isoindolinone pigments, and quinophthalone pigments, dye lakes such as basic dye lakes and acidic dye lakes, nitro pigments, nitroso pigments, aniline black, and daylight fluorescent pigments.

Examples of the inorganic pigments include titanium oxide, iron oxide, calcium carbonate, barium sulfate, aluminum hydroxide, barium yellow, cadmium red, chromium yellow, and carbon black.

Examples of the coloring agent include organic pigments and inorganic pigments designated by the following numbers in Colour Index.

Examples of blue pigments and cyan pigments include Pigment Blue 1, 15, 15:1, 15:2, 15:3, 15:4, 15:6, 16, 17-1, 22, 27, 28, 29, 36, and 60,
examples of green pigments include Pigment Green 7, 26, 36, and 50,
examples of red pigments and magenta pigments include Pigment Red 3, 5, 9, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, Pigment Orange 13, 16, 20, and 36,
examples of yellow pigments include Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193,
examples of black pigments include Pigment Black 7, 28, and 26, and
examples of white pigments include Pigment White 6, 18, and 21.

Other pigments not described in Colour Index may be appropriately used in accordance with the purpose. Examples include pigments surface-treated with, for example, a surfactant or a high molecular weight dispersant, and graft carbon.

Examples of the high molecular weight dispersant include polyamidoamine and salts thereof, polycarboxylic acid and salts thereof, high molecular weight unsaturated acid ester, modified polyurethane, and polyether ester.

The high molecular weight dispersant may be a commercially available product. Examples of the commercially available product include high molecular weight dispersants such as DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, DisperBYK-182 (all manufactured by BYK Japan KK), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, EFKA7580 (all manufactured by EFKA Additives), DISPERSEAID 6, DISPERSEAID 8, DISPERSEAID 15, and DISPERSEAID 9100 (manufactured by San Nopco Limited); various Solsperse dispersants such as Solsperse 3000, 5000, 9000, 12000, 13240, 13940, 17000, 22000, 24000, 26000, 28000, 32000, 36000, 39000, 41000, and 71000 (manufactured by Avecia Inkjet Limited); ADEKA Pluronic L31, F38, L42, L44, L61, L64, F68, L72, P95, F77, P84, F87, P94, L101, P103, F108, L121, P-123 (manufactured by ADEKA CORPORATION), IONET (registered trademark) S-20 (manufactured by Sanyo Chemical Industries, Ltd.), "DISPARLON KS-860, 873SN, 874 (high molecular weight dispersant), #2150 (aliphatic polycarboxylic acid), and #7004 (polyether ester type)" manufactured by Kusumoto Chemicals, Ltd.

In the pigment surface-treated with a high molecular weight dispersant, the content ratio of the high molecular weight dispersant to the pigment (high molecular weight dispersant:pigment) is preferably 1:1 to 1:10, more preferably 1:1 to 1:5, still more preferably 1:2 to 1:3.

The coloring agent may be a commercially available product. Examples of the commercially available product include Paliotol (BASF), Cinquasia and Irgalite (both are from Ciba Speciality Chemicals), and Hostaperm (Clariant UK).

Among such coloring agents, preferred cyan pigments are phthalocyanine pigments such as Pigment Blue 15:4. Preferred yellow pigments are azo pigments such as Pigment Yellow 120, Pigment Yellow 151, and Pigment Yellow 155. Preferred magenta pigments are quinacridone pigments such as mixed crystal quinacridone of Pigment Violet 19 and Cinquasia MAGENTA L4540. Preferred black pigments are carbon black pigments such as Pigment Black 7.

The volume-average particle diameter of the coloring agent is not particularly limited, but, from the viewpoint of ink ejectability, it is preferably less than 8 µm, more preferably less than 5 µm, still more preferably less than 1 µm, particularly preferably less than 0.5 µm. The lower limit of the volume-average particle diameter of the coloring agent is not particularly limited, but, from the viewpoint of colorability and light resistance, it is preferably 0.001 µm or more, more preferably 0.01 µm or more.

The volume-average particle diameter can be measured with a laser diffraction particle size distribution analyzer (for example, Mastersizer 2000 manufactured by Malvern Instruments Limited, or a laser diffraction/scattering particle size distribution analyzer LA-920 manufactured by HORIBA, Ltd.).

### Other components

The liquid composition according to the present disclosure may contain, as needed, other components different from those described above.

Examples of the other components include surfactants, polymerization inhibitors, sensitizers, ultraviolet absorbents, antioxidants, fading inhibitors, electroconductive salts, and basic compounds.

Examples of the surfactants include surfactants described in JP1987-173463A (JP-S62-173463A) and JP1987-183457A (JP-S62-183457A).

Examples of the surfactants include anionic surfactants such as dialkyl sulfosuccinic acid salts, alkylnaphthalenesulfonic acid salts, and fatty acid salts; nonionic surfactants such as polyoxyethylene alkyl ethers, polyoxyethylene alkylaryl ethers, acetylene glycols, polyoxyethylene-polyoxypropylene block copolymers, and siloxanes; and cationic surfactants such as alkylamine salts and quaternary ammonium salts.

In the liquid composition according to the present disclosure, the surfactant content is appropriately selected in accordance with the usage purpose; however, the surfactant content relative to the total amount of the liquid composition is preferably 0.0001 mass% to 1 mass%, more preferably 0.01 mass% to 1 mass%.

Examples of the polymerization inhibitors include p-methoxyphenol, quinones (such as hydroquinone, benzoquinone, and methoxybenzoquinone), phenothiazine, catechols, alkylphenols (such as dibutylhydroxytoluene (BHT)), alkylbisphenols, dimethyldithiocarbamic acid zinc, dimethyldithiocarbamic acid copper, dibutyldithiocarbamic acid copper, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), cupferron Al, and tris(N-nitroso-N-phenylhydroxylamine) aluminum salt.

Of these, preferred is at least one selected from the group consisting of p-methoxyphenol, catechols, quinones, alkylphenols, TEMPO, TEMPOL, cupferron Al, and tris(N-nitroso-N-phenylhydroxylamine) aluminum salt; more preferred is at least one selected from the group consisting of p-methoxyphenol, hydroquinone, benzoquinone, BHT, TEMPO, TEMPOL, cupferron Al, and tris(N-nitroso-N-phenylhydroxylamine) aluminum salt.

In the liquid composition according to the present disclosure, the polymerization inhibitor content is appropriately selected in accordance with the usage purpose; however, the polymerization inhibitor content relative to the total amount of the liquid composition is preferably 0.0001 mass% to 1 mass%, more preferably 0.01 mass% to 1 mass%.

### Preferred properties of liquid composition

The color ink preferably has a surface tension at 25°C of 18 mN/m or more and 40 mN/m or less, more preferably 22 mN/m or more and 35 mN/m or less, still more preferably 25 mN/m or more and 30 mN/m or less.

The surface tension can be measured in an environment at a temperature of 25°C with an Automatic Surface Tensiometer CBVP-Z (Kyowa Interface Science Co., Ltd.).

The liquid composition preferably has a viscosity at 25°C of 200 mPa·s or less, more preferably 100 mPa·s or less, still more preferably 25 mPa·s or less, still more preferably 10 mPa·s or less, particularly preferably 7 mPa·s or less.

The liquid composition preferably has a viscosity at 25°C of 2 mPa·s or more, more preferably 4 mPa·s or more, particularly preferably 5 mPa·s or more.

The viscosity of the liquid composition is a value measured with a VISCOMETER TV-22 (manufactured by TOKI SANGYO CO. LTD).

### Recording medium

The liquid composition according to the present disclosure is used for forming an image on a recording medium by an ink jet method.

As described above, the liquid composition according to the present disclosure enables formation of images having high wear resistance and high bendability. Thus, the liquid composition according to the present disclosure is particularly suitable for the application of ink jet recording for soft substrates serving as recording media, for example, the application of decorative printing performed by ink jet recording for leather products (such as vehicle seats, bags, shoes, and wallets). However, the liquid composition according to the present disclosure is not limited to such applications and is also applicable to ordinary ink jet recording onto ordinary recording media such as paper.

As described above, preferred recording media are soft substrates. Specific examples of the soft substrates include leather, cloth, and polymer films. In particular, leather is preferred.

Examples of the leather include natural leather (also referred to as "real leather") and synthetic leather (such as PVC (polyvinyl chloride) leather and PU (polyurethane) leather). Regarding the leather, refer to Paragraphs 0163 to 0165 of JP2009-058750A, for example. Inkjet recording method

As described above, the liquid composition according to the present disclosure can be used as a color ink or a colorless ink (such as a topcoat liquid) in ink jet recording.

Hereinafter, an embodiment of an ink jet recording method using the liquid composition according to the present disclosure will be described; however, the present invention is not limited to the following embodiment.

The ink jet recording method according to this embodiment has an ejection step of ejecting, on a recording medium, through an ink jet head, the liquid composition according to the present disclosure to form an image; a heating step of heating the image formed on the recording medium to remove at least a portion of the organic solvent included in the image; and a curing step of irradiating the heated image with an active energy ray to cure the image.

The ink jet recording method according to this embodiment may have another step as needed.

The ink jet recording method according to this embodiment forms an image cured (hereafter, also referred to as a "cured image") on a recording medium. Herein, the concept of the image naturally encompasses solid images.

The liquid composition according to the present disclosure exhibits, in the ejection step, high stability of ejection through an ink jet head (IJ ejection stability). The cured images formed have high wear resistance and high bendability.

The scope of the ink jet recording method according to this embodiment includes Method A including an ejection step of ejecting, onto a recording medium, a coloring-agent-containing liquid composition as an example of the liquid composition according to the present disclosure.

This Method A enables formation of color images having high wear resistance and high bendability.

The scope of the ink jet recording method according to this embodiment also includes Method B including an ejection step of ejecting, onto a color image of a recording medium having the color image, a liquid composition having a coloring agent content of less than 0.1 mass% (hereafter, also referred to as a "colorless ink") as an example of the liquid composition according to the present disclosure.

This Method B enables the color image to be covered with a topcoat film formed by curing the liquid composition. In other words, the color image covered with the topcoat film (hereafter, also referred to as a "topcoat-film-equipped color image") is obtained. The topcoat film formed has high wear resistance and high bendability, so that the topcoat-film-equipped color image also has high wear resistance and high bendability.

The color image in Method B is not particularly limited, and examples include color images formed by an ink jet method. Such a color image may be formed from a coloring-agent-containing liquid composition as an example of the liquid composition according to the present disclosure, or a color ink other than the liquid composition according to the present disclosure.

The color ink other than the liquid composition according to the present disclosure at least includes a coloring agent and may be a photocurable color ink (in other words, a color ink including a polymerizable compound), or a non-photocurable color ink (in other words, a color ink not including any polymerizable compound).

### Ejection step

In the ink jet recording method according to this embodiment, the ejection step is a step of ejecting the liquid composition according to the present disclosure through an ink jet head onto a recording medium to form an image.

The method of ejecting the liquid composition through an ink jet head is not particularly limited and a publicly known method can be appropriately employed: for example, a charge control method of using an electrostatic attraction force to eject ink; a drop-on-demand method (pressure pulse method) using vibration pressure of a piezo element; an acoustic ink jet method of turning electric signals into acoustic beams and applying the acoustic beams to ink to use the radiation pressure to eject the ink; or a thermal ink jet (BUBBLEJET (registered trademark)) method of heating ink to form bubbles and using the generated pressure.

### Heating step

In the ink jet recording method according to this embodiment, the heating step is a step of heating an image formed on a recording medium, to remove at least a portion of the organic solvent included in the image.

The heating in the heating step is preferably performed such that, from the viewpoint of suppression of bleeding of the image and enhancement of the adhesion of the image, the surface temperature of the recording medium is kept at 40°C or more and 100°C or less (more preferably, 40°C or more and 80°C or less, still more preferably 50°C or more and 70°C or less).

From the same viewpoint as above, the heating time in the heating step is preferably 1 second or more, more preferably 5 seconds or more, particularly preferably 8 seconds or more.

The upper limit of the heating time is not particularly limited; however, the upper limit is preferably 60 seconds, more preferably 30 seconds, particularly preferably 20 seconds.

### Curing step

In the ink jet recording method according to this embodiment, the curing step is a step of irradiating the heated image with an active energy ray to cure the image.

This step causes curing of the image on the recording medium, to form a cured image having high wear resistance and high bendability.

Examples of the active energy ray include α-rays, γ-rays, electron beams, X-rays, ultraviolet radiation, visible radiation, and infrared radiation. The peak wavelength of the active energy ray varies, in the case of using a sensitizer, in accordance with the absorption characteristic of the sensitizer; however, the peak wavelength is, for example, preferably 200 nm to 600 nm, more preferably 300 nm to 450 nm, still more preferably 350 nm to 420 nm.

The curing is preferably performed at an exposure surface illuminance of 10 mJ/cm² to 10000 mJ/cm², more preferably 100 mJ/cm² to 5000 mJ/cm².

The active energy ray source is not particularly limited and may be selected from ordinary active energy ray sources such as mercury lamps, metal halide lamps, gas lasers, solid-state lasers, and GaN semiconductor ultraviolet-emitting devices (such as a light-emitting diode (LED) and a laser diode (LD)).

An example of the LED is a product from Nichia Corporation that is a violet LED having a main emission spectrum of wavelengths between 365 nm and 420 nm. When an even shorter wavelength is required, an example of the LED is an LED that is disclosed in US6,084,250A and is configured to emit an active energy ray having the central wavelength between 300 nm and 370 nm. Other ultraviolet LEDs are also available and ultraviolet radiation in different bands can be applied.

The irradiation time of the active energy ray is preferably 0.01 seconds to 120 seconds, more preferably 0.1 seconds to 90 seconds.

Specific examples of the irradiation system of an active energy ray include a shuttle system in which a short serial head is equipped with an active-energy-ray irradiation device and the head is used to scan a recording medium in its width direction to achieve the irradiation; and a single pass system in which active-energy-ray irradiation devices are arranged so as to cover the entirety of one side of a recording medium.

Regarding the irradiation conditions and basic irradiation methods of an active energy ray, for example, refer to publicly known documents such as JP1985-132767A (JP-S60-132767 A).

The irradiation with an active energy ray is preferably performed, from completion of the heating step, after a lapse of time (preferably 0.01 seconds to 0.5 seconds, more preferably 0.01 seconds to 0.3 seconds, still more preferably 0.01 seconds to 0.15 seconds).

Alternatively, another light source that is not driven may be used to achieve curing of the liquid composition. WO99/54415A discloses irradiation methods including a method using optical fibers and a method of directing a collimated light source to a mirror surface provided on a side surface of a head unit to irradiate the recording region with ultraviolet radiation. Such curing methods are also applicable to the ink jet recording method according to this embodiment.

The ink jet recording method according to this embodiment can be performed with a publicly known ink jet recording apparatus.

Examples of the recording system of such an ink jet recording apparatus include a shuttle system in which a short serial head is used and the head is used to scan a recording medium in its width direction to achieve recording, and a line system (single pass system) of using a line head in which recording elements are arranged so as to cover the entirety of one side of the recording medium.

The ink jet recording method according to this embodiment may employ an ink jet recording apparatus of the shuttle system or the line system. Regarding the ink jet recording apparatus of the shuttle system, for example, refer to JP2010-280828A.

### Examples

Hereinafter, the present invention will be described further in detail with reference to Examples. The scope of the present invention is not limited to the following specific examples. Incidentally, "parts" and "%" are based on mass unless otherwise specified. Production of specified (meth)acrylic-modified polyorganosiloxanes

Specific examples of the specified (meth)acrylic-modified polyorganosiloxane, Polymers 1 to 3, were produced. This will be described below in detail.

### Production of Polymer 1

### Preparation of Emulsion A

The components of the following composition were mixed and stirred, and then subjected to homogenizer (12000 rpm (round per minute; hereafter the same definition)) treatment, to obtain Emulsion A.

### Composition of Emulsion A

Octamethylcyclotetrasiloxane: 1500 parts
3-Mercaptopropyltrimethoxysilane (manufactured by Shin-Etsu Chemical Co., Ltd., KBM-803): 98.4 parts
Ultrapure water: 1500 parts
Lauryl sodium sulfate: 100 parts
Dodecyl benzenesulfonic acid: 100 parts

### Preparation of Emulsion B

Emulsion A above was heated at 70°C for 12 hours, subsequently cooled to 25°C, and aged for 24 hours. Subsequently, the aged emulsion was adjusted to pH 7 by being mixed with sodium carbonate, and subsequently nitrogen gas was blown into the emulsion for 4 hours. Subsequently, steam distillation was performed to distill off volatile siloxane from the emulsion.

After the distillation, to the remaining emulsion, ultrapure water was added, to obtain Emulsion B having a solid content concentration of 45%.

As a result of analysis performed by infrared absorption spectrum measurement and NMR spectrum measurement, Emulsion B was presumed to contain a mixture of Compound (I-1) having the following structure (mixture satisfying m/n = 10.1).

On the basis of the weight-average molecular weight (60000) of Polymer 1 described below, Emulsion B is presumed to contain Compound (I-1) in which m is 1 to 10000 and n is 1 or more.

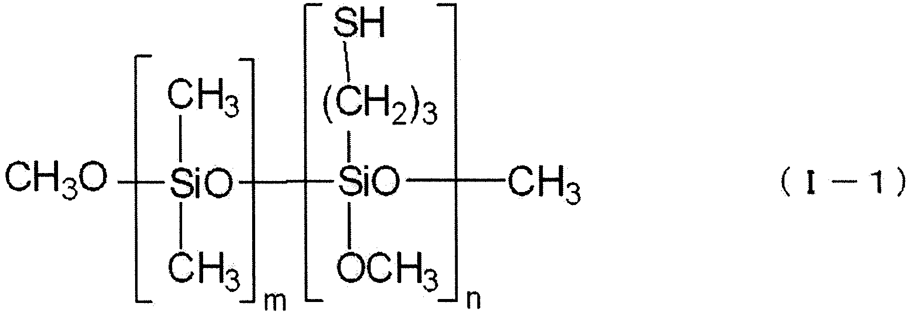

### Preparation of Emulsion C

A Group 1 liquid having a composition below was charged into a reaction vessel (nitrogen atmosphere), and subsequently maintained at a temperature of 10°C. To this, a Group 2 mixture having a composition below was slowly added. To this, a Group 3 mixture having a composition below was subsequently dropped over 5 hours. After completion of dropping of the Group 3 mixture, the resultant mixture was stirred for 2 hours.

Subsequently, to the mixture after the stirring for 2 hours, ultrapure water was added, to obtain Emulsion C having a solid content concentration of 25%.

### Composition of Group 1 liquid

Emulsion B: 477 parts
Pure water: 1400 parts

### Composition of Group 2 mixture

t-Butylhydroperoxide: 1.0 part
L-ascorbic acid: 0.5 parts
Ferrous sulfate heptahydrate: 0.002 parts

### Composition of Group 3 mixture

Ethyl acrylate: 147 parts
Methyl methacrylate: 343 parts
2-Hydroxyethyl methacrylate: 10 parts

### Production of Polymer 1

Mixture PI having a composition below was stirred while being maintained at a temperature of 60°C, to precipitate solid matter. The precipitated solid matter was repeatedly subjected to filtration and rinsing, and subsequently dried at 70°C, to obtain Polymer 1.

### Composition of Mixture P1

Emulsion C: 1000 parts
Sodium sulfate: 92 parts
Pure water: 470 parts

The volume-average primary particle diameter (hereafter, also simply referred to as "particle diameter") of the obtained Polymer 1 was measured with a laser diffraction-scattering particle size distribution analyzer (LA920, manufactured by HORIBA, Ltd.) and with tripropylene glycol methyl ether serving as a measurement medium. The particle diameter was found to be 0.1 µm.

In addition, the weight-average molecular weight (Mw) of the obtained Polymer 1 was measured by GPC in accordance with the above-described method. The Mw was found to be 60000.

The particle diameter and Mw of the following specified (meth)acrylic-modified polyorganosiloxanes other than Polymer 1 were measured by the same measurement methods as the measurement methods for the particle diameter and Mw of Polymer 1.

### Production of Polymers 2 and 3

During production of Polymer 1, at the stage of obtaining Emulsion A, the number of rotations of the homogenizer, the concentration of lauryl sodium sulfate, and the concentration of dodecyl benzenesulfonic acid were changed, to obtain Polymer 2 having a particle diameter of 0.2 µm and an Mw of 100000, and Polymer 3 having a particle diameter of 0.3 µm and an Mw of 150000.

On the basis of the weight-average molecular weights (100000 and 150000) of Polymers 2 and 3, Emulsion B at the intermediate stage for obtaining each Polymer is presumed to contain the above-described Compound (I-1) in which m is 1 to 10000 and n is 1 or more.

Another specified (meth)acrylic-modified polyorganosiloxane, CHALINE (registered trademark) R175S (manufactured by Nissin Chemical Industry Co., Ltd.), was prepared.

CHALINE (registered trademark) R175S had a particle diameter of 0.2 µm and an Mw of 100000.

The above-described Polymers 1 to 3 and CHALINE R175S are all specific examples of the specified (meth)acrylic-modified polyorganosiloxane.

### Preparation of pigment dispersions

In Table 1 below, the components other than the pigments were mixed so as to satisfy the compositions in Table 1, stirred with a mixer from SILVERSON at 2,000 rounds/min to 3,000 rounds/min for 10 minutes to 15 minutes to obtain homogeneous dispersant dilutions. To the dispersant dilutions, the pigments in the amounts described in Table 1 were added, and stirring was further performed with the mixer at 2,000 rounds/min to 3,000 rounds/min for 10 minutes to 20 minutes, to obtain 500 parts of homogeneous preliminary dispersion liquids.

Subsequently, the obtained preliminary dispersion liquids were subjected to dispersion treatment with a circulation bead mill (SL-012C1) of DISPERMAT, to obtain pigment dispersions of the colors. This dispersion treatment was performed with the circulation bead mill charged with 200 parts of zirconia beads having a diameter of 0.65 mm, at a peripheral speed of 15 m/s, for a dispersion time of 1 hour to 6 hours.

**Table 1**

| | Pigment mill base Cyan 1 | Pigment mill base Magenta 1 | Pigment mill base Yellow 1 | Pigment mill base Black 1 |
|---|---|---|---|---|
| Pigment | PB15:4 | Mixed crystal quinacridone | PY155 | Carbon black |
| | 30 mass% | 30 mass% | 30 mass% | 30 mass% |
| Dispersant | Sol32000 | Sol32000 | Sol32000 | Sol32000 |
| | 10 mass% | 15 mass% | 10 mass% | 10 mass% |
| DEGDE | 60 mass% | 55 mass% | 60 mass% | 60 mass% |

The components in Table 1 are specifically as follows.
- PB15:4: C.I. Pigment Blue 15:4, from BASF, HELIGOEN BULE D7110F
- Mixed crystal quinacridone: from BASF, CINQUASIA MAGENTA L 4540
- PY155 : C.I. Pigment Yellow 155, from Clarina, INK JET YELLOW 4GC
- Carbon black: from CABOT Corporation, MOGUL E
- Sol32000: from Luburizol Corporation, SOLSPERSE 32000
- DEGDE: from Tokyo Chemical Industry Co., Ltd., diethylene glycol diethyl ether

### Example 1

### Preparation of color ink

The components of a composition in Table 2 below were mixed and stirred with a mixer from SILVERSON at 2,000 rounds/min to 3,000 rounds/min for 10 minutes to 15 minutes to prepare, as an ink-jet-printer liquid composition, a color ink (cyan ink in Example 1).

### Formation of cured image

An ink jet printer equipped with an Ink jet head CA4 manufactured by TOSHIBA TEC CORPORATION was prepared.

The above-described color ink was charged into the ink jet printer. The color ink was ejected through the ink jet head heated at 35°C onto a recording medium that was a substrate [PVC leather; Cappuccino CP-830 (YAMAPLAS CO., LTD.)], to form a solid image (cyan solid image in Example 1). At this time, the image density was set to 1200 dpi × 600 dpi, and the amount of color ink applied to the substrate was set to 20 g/m².

Subsequently, the substrate having the solid image was heated with a rubber heater at a substrate temperature of 60°C for 10 seconds, to dry the solid image.

Subsequently, the dried solid image was irradiated with UV (ultraviolet radiation) at an irradiation dose of 3000 mJ/cm² from a UV exposure device, to cure the solid image. Thus, a cured image was obtained.

Incidentally, in this Specification, "dpi" means dot per inch.

### Evaluations

The cured image or the color ink was used to perform the following evaluations. The results are described in Table 2.

### Wear resistance A

A Gakushin tester (Suga Test Instruments Co., Ltd.) was used to wear down certain times the cured image with dry cotton under application of a load of 200 g. In this process, the number of the times was recorded until scratching of the cured image was first observed, and the cured image was evaluated in terms of wear resistance (hereafter, referred to as "wear resistance A") on the basis of the following evaluation system. In the following evaluation system, 3 or more points are evaluated as passes.

### Evaluation system of wear resistance A

5 points: No scratching occurred for as large as 2000 times.
4 points: Scratching occurred from 1000 times or more and less than 2000 times.
3 points: Scratching occurred from 500 times or more and less than 1000 times.
2 points: Scratching occurred from 100 times or more and less than 500 times.
1 point: Scratching occurred less than 100 times.

### Bendability

A bend tester (FLEXO-METER/YASUDA SEIKI SEISAKUSHO, LTD.) was used to bend certain times the substrate having the cured image. In this process, the number of the times was recorded until cracking of the cured image was first observed, and the cured image was evaluated in terms of bendability on the basis of the following evaluation system. In the following evaluation system, 3 or more points are evaluated as passes.

### Evaluation system of bendability

5 points: No cracking occurred for as large as 20000 times.
4 points: Cracking occurred from 10000 times or more and less than 20000 times.
3 points: Cracking occurred from 5000 times or more and less than 10000 times.
2 points: Cracking occurred from 1000 times or more and less than 5000 times.
1 point: Cracking occurred less than 1000 times.

### Chemical resistance

A Gakushin tester (Suga Test Instruments Co., Ltd.) was used to wear down certain times the cured image with ethanol-impregnated cotton under application of a load of 400 g. In this process, the number of the times was recorded until the cured image was peeled off and the surface of the substrate first became visible, and the cured image was evaluated in terms of chemical resistance on the basis of the following evaluation system. In the following evaluation system, 3 or more points are evaluated as passes.

### Evaluation system of chemical resistance

5 points: No substrate surface becomes visible for as large as 200 times.
4 points: The substrate surface becomes visible from 100 times or more and less than 200 times.
3 points: The substrate surface becomes visible from 50 times or more and less than 100 times.
2 points: The substrate surface becomes visible from 10 times or more and less than 50 times.
1 point: The substrate surface becomes visible less than 10 times.

### IJ ejection stability

Under the same conditions as in the printing of the solid image except that the substrate was changed to A3-sized recording paper (ink jet photographic paper; "Kassai" (manufactured by FUJIFILM Corporation), solid images were continuously printed on 40 sheets of the recording paper. Hereafter, the recording paper on which a solid image is printed will be referred to as a "sample". Such samples (40 sheets) were visually observed to determine the number of samples having solid images having missing dots caused by nozzle failure (specifically, an image defect caused by ejection failure of a nozzle). On the basis of the results, IJ ejection stability (namely, stability of ejection of color ink through an ink jet head) was evaluated in accordance with the following evaluation system. In the following evaluation system, 3 or more points are evaluated as passes.

### Evaluation system of IJ ejection stability

5 points: 0 samples were found to have missing dots caused by nozzle failure
4 points: 1 sample was found to have missing dots caused by nozzle failure
3 points: 2 samples were found to have missing dots caused by nozzle failure
2 points: 3 samples were found to have missing dots caused by nozzle failure
1 point: 4 or more samples were found to have missing dots caused by nozzle failure Examples 2 to 15 and Comparative Examples 1 to 6

The same procedures as in Example 1 were performed except that the composition of the color ink was changed to the compositions described in the following Table 2 and Table 3. The results are described in Table 2 and Table 3.

**Table 2**

| | | | Example 1 | Example 2 | Example 3 | Example 4 | Example 5 | Example 6 | Comparative Example 1 | Comparative Example 2 |
|---|---|---|---|---|---|---|---|---|---|---|
| | Specified (meth)acrylic-modified polyorganosiloxane | Polymer 1 (particle diameter: 0.1 µm) | | | | 0.5 | | | | |
| | | Polymer 2 (particle diameter: 0.2 µm) | 0.5 | 0.1 | 5 | | | | 0.05 | 6 |
| | | Polymer 3 (particle diameter: 0.3 µm) | | | | | 0.5 | | | |
| | | R175S | | | | | | 0.5 | | |
| | Pigment mill base Cyan 1 | | 5 | 5 | 5 | 5 | 5 | 5 | 5 | 5 |
| | Polymerizable compound | CN996 (Mw 2850, bifunctional) | 20 | 20 | 20 | 20 | 20 | 20 | 20 | 20 |
| | | UA-122P (Mw 1100, bifunctional) | | | | | | | | |
| Color ink | | UV-6630B (Mw 3000, bifunctional) | | | | | | | | |
| | | UV-3310B (Mw 5000, bifunctional) | | | | | | | | |
| | | UV-3000B (Mw 18000, bifunctional) | | | | | | | | |
| | | UV-7630B (Mw 2200, hexafunctional) | | | | | | | | |
| | Photopolymerization initiator | Irg2959 | 3 | 3 | 3 | 3 | 3 | 3 | 3 | 3 |
| | | Ir819 | 3 | 3 | 3 | 3 | 3 | 3 | 3 | 3 |
| | Surfactant | BYK331 | 0.1 | 0.1 | 0.1 | 0.1 | 0.1 | 0.1 | 0.1 | 0.1 |
| | Polymerization inhibitor | UV12 | 0.1 | 0.1 | 0.1 | 0.1 | 0.1 | 0.1 | 0.1 | 0.1 |
| | Organic solvent | DEGDE | 68.3 | 68.7 | 63.8 | 68.3 | 68.3 | 68.3 | 68.75 | 62.8 |
| Evaluation results | Wear resistance A | | 4 | 3 | 5 | 3 | 4 | 4 | 2 | 5 |
| | Bendability | | 5 | 5 | 5 | 5 | 5 | 5 | 5 | 5 |
| | Chemical resistance | | 4 | 4 | 5 | 4 | 4 | 4 | 4 | 5 |
| | IJ ejection stability | | 4 | 5 | 3 | 5 | 3 | 4 | 5 | 2 |

**Table 3**

| | | | Example 1 | Comparative Example 3 | Comparative Example 4 | Example 7 | Example 8 | Example 9 | Example 10 | Example 11 | Example 12 | Example 13 | Example 14 | Example 15 | Comparative Example 5 | Comparative Example 6 |
|---|---|---|---|---|---|---|---|---|---|---|---|---|---|---|---|---|
| | Specified (meth)acrylic-modified polyorganosiloxane | Polymer 1 (particle diameter: 0.1 µm) | | | | | | | | | | | | | | |
| | | Polymer 2 (particle diameter: 0.2 µm) | 0.5 | 0.5 | 0.5 | 0.5 | 0.5 | 0.5 | 0.5 | 0.5 | 0.5 | 0.5 | 0.5 | 0.5 | | |
| | | Polymer 3 (particle diameter: 0.3 µm) | | | | | | | | | | | | | | |
| | | R175S | | | | | | | | | | | | | | |
| | Polyether-modified polyorganosiloxane | BYK307 | | | | | | | | | | | | | 0.5 | |
| | Silicone polyether acrylate | TEGORAD2010 | | | | | | | | | | | | | | 0.5 |
| | Pigment mill base Cyan 1 | | 5 | 5 | 5 | 5 | 5 | 5 | 5 | 5 | 5 | | | | 5 | 5 |
| | Pigment mill base Magenta 1 | | | | | | | | | | | 12 | | | | |
| | Pigment mill base Yellow 1 | | | | | | | | | | | | 8 | | | |
| | Pigment mill base Black 1 | | | | | | | | | | | | | 5 | | |
| Color ink | Polymerizable compound | CN996 (Mw 2850, bifunctional) | 20 | 20 | 8 | | | | | 15 | 10 | 20 | 20 | 20 | 20 | 20 |
| | | UA-122P (Mw 1100, bifunctional) | | | | 20 | | | | | | | | | | |
| | | UV-6630B (Mw 3000, bifunctional) | | | | | 20 | | | | | | | | | |
| | | UV-3310B (Mw 5000, bifunctional) | | | | | | 20 | | | | | | | | |
| | | UV-3000B (Mw 18000, bifunctional) | | | | | | | 20 | | | | | | | |
| | | UV-7630B (Mw 2200, hexafunctional) | | | | | | | | 5 | 10 | | | | | |
| | Photopolymerization initiator | Irg2959 | 3 | 3 | 3 | 3 | 3 | 3 | 3 | 3 | 3 | 3 | 3 | 3 | 3 | 3 |
| | | Ir819 | 3 | 3 | 3 | 3 | 3 | 3 | 3 | 3 | 3 | 3 | 3 | 3 | 3 | 3 |
| | Surfactant | BYK331 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Polymerization inhibitor | UV12 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Organic solvent | DEGDE | 68.3 | 33.3 | 80.3 | 68.3 | 68.3 | 68.3 | 68.3 | 68.3 | 68.3 | 61.3 | 65.3 | 68.3 | 68.3 | 68.3 |
| | Monomer | PEA | 0 | 35 | 0 | 0 | 0 | 0 | 0 | 0 | 0 | 0 | 0 | 0 | 0 | 0 |
| Evaluation results | Wear resistance A | | 4 | 2 | 1 | 5 | 4 | 4 | 3 | 4 | 5 | 4 | 4 | 4 | 1 | 1 |
| | Bendability | | 5 | 1 | 5 | 4 | 5 | 5 | 5 | 4 | 3 | 5 | 5 | 5 | 5 | 5 |
| | Chemical resistance | | 4 | 5 | 2 | 5 | 4 | 3 | 3 | 5 | 5 | 4 | 4 | 4 | 4 | 4 |
| | IJ ejection stability | | 4 | 2 | 5 | 4 | 4 | 4 | 3 | 4 | 4 | 4 | 4 | 4 | 4 | 4 |

### Descriptions of Table 2 to Table 4

The value in a cell of each component in Table 2 and Table 3 above and Table 4 below is the amount of the component (parts by mass).

The components in Table 2 to Table 4 are specifically as follows.

### (Meth)acrylic-modified polyorganosiloxane

Polymers 1 to 3 : Polymers 1 to 3 produced above
R175S: "CHALINE (registered trademark) R175S" (meth)acrylic-modified polyorganosiloxane from Nissin Chemical Industry Co., Ltd.

### Polyether-modified polyorganosiloxane

BYK307: polyether-modified polydimethylsiloxane from BYK Japan KK

### Silicone polyether acrylate

TEGORAD2010: TEGO (registered trademark) RAD2010 (silicone polyether acrylate) from Evonik Degussa GmbH. This TEGORAD2010 is not a copolymer of a specified reactive polysiloxane and (meth)acrylate.

### Polymerizable compound

CN996: bifunctional urethane acrylate (weight-average molecular weight (Mw) = 2850) from Sartomer
UA-122P: bifunctional urethane acrylate (Mw = 1100) from Shin Nakamura Chemical Co., Ltd.
UV-6630B: "SHIKOH (registered trademark) UV-6630B" (bifunctional urethane acrylate, Mw = 3000) from The Nippon Synthetic Chemical Industry Co., Ltd.
UV-3310B: "SHIKOH (registered trademark) UV-3310B" (bifunctional urethane acrylate, Mw = 5000) from The Nippon Synthetic Chemical Industry Co., Ltd.
UV-3000B: "SHIKOH (registered trademark) UV-3000B" (bifunctional urethane acrylate, Mw = 18000) from The Nippon Synthetic Chemical Industry Co., Ltd.
UV-7630B: "SHIKOH (registered trademark) UV-7630B" (hexafunctional urethane acrylate, Mw = 2200) from The Nippon Synthetic Chemical Industry Co., Ltd. Photopolymerization initiator

Irg2959: "IRGACURE2959" (1-[4-(2-hydroxyethoxy)-phenyl]-2-hydroxy-2-methyl-1-propan-1-one) from BASF
Irg819: "IRGACURE819" (bis(2,4,6-trimethylbenzoyl)-phenylphosphine oxide) from BASF

### Surfactant

BYK331: polyether-modified polydimethylsiloxane from BYK Japan KK Polymerization inhibitor
UV12: nitroso polymerization inhibitor, tris(N-nitroso-N-phenylhydroxylamine) aluminum salt, from Kromachem Ltd, FLORSTAB UV12

### Organic solvent

DEGDE: diethylene glycol diethyl ether from Tokyo Chemical Industry Co., Ltd.

### Monomer

PEA: phenoxyethyl acrylate from Sartomer, SR339C

As described in Table 2 and Table 3, the inks of Examples 1 to 15 have high IJ ejection stability, which contain an organic solvent, a polymerizable compound having a weight-average molecular weight of 1000 or more and 30000 or less, a specified (meth)acrylic-modified polyorganosiloxane, and a photopolymerization initiator, have an organic solvent content of 40 mass% or more and 80 mass% or less, and have a specified (meth)acrylic-modified polyorganosiloxane content of 0.1 mass% or more and 5.0 mass% or less. The cured images formed in these Examples 1 to 15 have high wear resistance and also have high bendability and high chemical resistance.

On the other hand, in Comparative Example 1, which has a specified (meth)acrylic-modified polyorganosiloxane content of less than 0.1 mass%, the cured image has degraded wear resistance.

In Comparative Example 2, which has a specified (meth)acrylic-modified polyorganosiloxane content of more than 5.0 mass%, the ink has degraded IJ ejection stability.

In Comparative Example 3, which has an organic solvent content of less than 40 mass%, the ink has degraded IJ ejection stability, and the cured image has degraded wear resistance and degraded bendability.

In Comparative Example 4, which has an organic solvent content of more than 80 mass%, the cured image has degraded wear resistance and the cured image has degraded chemical resistance.

In Comparative Examples 5 and 6, which employ, instead of the specified (meth)acrylic-modified polyorganosiloxane, a polyether-modified polyorganosiloxane or a silicone polyether acrylate, the cured images have degraded wear resistance.

### Example 101

### Preparation of topcoat liquid

The components of a composition in Table 4 below were mixed and stirred with a mixer manufactured by SILVERSON at 2,000 rounds/min to 3,000 rounds/min for 10 minutes to 15 minutes to prepare, as an ink-jet-printer liquid composition, a topcoat liquid that was a colorless ink.

### Preparation of inks

Cyan ink C1 was prepared as with the color ink in Example 1 except that Polymer 2 was not contained.

Magenta ink M1 was prepared as with the color ink in Example 13 except that Polymer 2 was not contained.

Yellow ink Y1 was prepared as with the color ink in Example 14 except that Polymer 2 was not contained.

Black ink K1 was prepared as with the color ink in Example 15 except that Polymer 2 was not contained.

### Formation of full-color cured image

Cyan ink C1, Magenta ink M1, Yellow ink Y1, and Black ink K1 were used to form a full-color cured image (having a check pattern of red, blue, green, and black).

The full-color cured image was formed under the same conditions (the same devices and the same image formation conditions) as in the formation of the cured image in Example 1 except for the type of color ink and the image pattern.

### Formation of cured image (topcoat film) from topcoat liquid

The topcoat liquid was charged into the same ink jet printer as the ink jet printer used for forming the full-color cured image. The topcoat liquid was ejected through the ink jet head of the ink jet printer, to print a solid image of the topcoat liquid covering the whole full-color cured image. At this time, the image density was set to 1200 dpi × 600 dpi, and the application amount of topcoat liquid was set to 10 g/m².

Subsequently, the substrate having the solid image printed with the topcoat liquid was heated with a rubber heater at a substrate temperature of 60°C for 10 seconds, to dry the solid image.

Subsequently, the dried solid image formed from the topcoat liquid was irradiated with UV (ultraviolet radiation) at an irradiation dose of 3000 mJ/cm² from a UV exposure device, to cure the solid image formed from the topcoat liquid. Thus, a cured image (hereafter, also referred to as a "topcoat film") formed from the topcoat liquid was obtained.

The topcoat film was formed so as to cover the whole full-color cured image.

Hereafter, the full-color cured image and the topcoat film covering the whole full-color cured image are also referred to as a "topcoat-film-equipped cured image".

### Evaluations

The topcoat-film-equipped cured image or the topcoat liquid was used to perform the following evaluations. The results are described in Table 4.

### Bendability, chemical resistance, and IJ ejection stability

The topcoat-film-equipped cured image was evaluated in terms of bendability and chemical resistance as in Example 1.

The topcoat liquid was evaluated in terms of IJ ejection stability as in Example 1.

### Wear resistance B

The topcoat-film-equipped cured image was evaluated in terms of wear resistance (referred to as "wear resistance B").

The wear resistance B was evaluated as with wear resistance A in Example 1 except that the evaluation target was changed to the topcoat-film-equipped cured image, the load was changed to 400 g, and the evaluation system was changed as described below. In the following evaluation system, 3 or more points are evaluated as passes.

### Evaluation system of wear resistance B

5 points: No scratching occurred for as large as 20000 times.
4 points: Scratching occurred from 10000 times or more and less than 20000 times.
3 points: Scratching occurred from 5000 times or more and less than 10000 times.
2 points: Scratching occurred from 1000 times or more and less than 5000 times.
1 point: Scratching occurred less than 1000 times.

### Adhesion

The topcoat-film-equipped cured image was subjected to a cross-cut adhesion test in accordance with JIS K5066-5-6:1992. A cross-cut portion of the topcoat-film-equipped cured image was subjected to, three times, processes of affixing a tape to the portion and peeling off the tape (hereafter, referred to as the "peeling processes"). In the processes, the portion subjected to the peeling processes was visually observed to evaluate the adhesion of the topcoat-film-equipped cured image on the basis of the following evaluation system. In the following evaluation system, 3 or more points are evaluated as passes.

### Adhesion

5 points: The topcoat-film-equipped cured image was not damaged even by the three peeling processes.
4 points: The topcoat-film-equipped cured image was damaged by the third peeling process.
3 points: The topcoat-film-equipped cured image was damaged by the second peeling process.
2 points: The topcoat-film-equipped cured image was damaged by the first peeling process (however, the image was not peeled off).
1 point: The topcoat-film-equipped cured image was damaged and peeled off by the first peeling process.

### Examples 102 to 106 and Comparative Examples 101 to 104

The same procedures were performed as in Example 101 except that the composition of the topcoat liquid was changed to the compositions in Table 4 below. The results are described in Table 4.

**Table 4**

| | | | Example 101 | Example 102 | Example 103 | Example 104 | Example 105 | Example 106 | Comparative Example 101 | Comparative Example 102 | Comparative Example 103 | Comparative Example 104 |
|---|---|---|---|---|---|---|---|---|---|---|---|---|
| | Specified (meth)acrylic-modified polyorganosiloxane | Polymer 1 (particle diameter: 0.1 µm) | | | | 0.5 | | | | | | |
| | | Polymer 2 (particle diameter: 0.2 µm) | 0.5 | 0.1 | 5 | | | | 0.05 | 6 | | |
| | | Polymer 3 (particle diameter: 0.3 µm) | | | | | 0.5 | | | | | |
| | | R175S | | | | | | 0.5 | | | | |
| | Polyether-modified polyorganosiloxane | BYK307 | | | | | | | | | 0.5 | |
| | Silicone polyether acrylate | TEGORAD2010 | | | | | | | | | | 0.5 |
| | Polymerizable compound | CN996 (Mw 2850, bifunctional) | 15 | 15 | 15 | 15 | 15 | 15 | 15 | 15 | 15 | 15 |
| Topcoat liquid | | UA-122P (Mw 1100, bifunctional) | | | | | | | | | | |
| | | UV-6630B (Mw 3000, bifunctional) | | | | | | | | | | |
| | | UV-3310B (Mw 5000, bifunctional) | | | | | | | | | | |
| | | UV-3000B (Mw 18000, bifunctional) | | | | | | | | | | |
| | | UV-7630B (Mw 2200, hexafunctional) | | | | | | | | | | |
| | Photopolymerization initiator | Irg2959 | 3 | 3 | 3 | 3 | 3 | 3 | 3 | 3 | 3 | 3 |
| | | Ir819 | 3 | 3 | 3 | 3 | 3 | 3 | 3 | 3 | 3 | 3 |
| | Surfactant | BYK331 | 0.1 | 0.1 | 0.1 | 0.1 | 0.1 | 0.1 | 0.1 | 0.1 | 0.1 | 0.1 |
| | Polymerization inhibitor | UV12 | 0.1 | 0.1 | 0.1 | 0.1 | 0.1 | 0.1 | 0.1 | 0.1 | 0.1 | 0.1 |
| | Organic solvent | DEGDE | 78.3 | 78.7 | 73.8 | 78.3 | 78.3 | 78.3 | 78.75 | 72.8 | 78.3 | 78.3 |
| Evaluation results | Wear resistance B | | 4 | 3 | 5 | 3 | 4 | 4 | 2 | 5 | 1 | 1 |
| | Bendability | | 5 | 5 | 5 | 5 | 5 | 5 | 5 | 5 | 5 | 5 |
| | Chemical resistance | | 4 | 4 | 5 | 4 | 4 | 4 | 4 | 5 | 4 | 4 |
| | IJ ejection stability | | 4 | 5 | 3 | 5 | 3 | 4 | 5 | 2 | 4 | 5 |
| | Adhesion | | 5 | 5 | 5 | 5 | 5 | 5 | 4 | 4 | 5 | 5 |

As described in Table 4, the topcoat liquids in Examples 101 to 106 have high IJ ejection stability, which contain an organic solvent, a polymerizable compound having a weight-average molecular weight of 1000 or more and 30000 or less, a specified (meth)acrylic-modified polyorganosiloxane, and a photopolymerization initiator, have an organic solvent content of 40 mass% or more and 80 mass% or less, and have a specified (meth)acrylic-modified polyorganosiloxane content of 0.1 mass% or more and 5.0 mass% or less. The topcoat-film-equipped cured images formed in these Examples 101 to 106 have high wear resistance, and high bendability, high chemical resistance, and high adhesion.

On the other hand, in Comparative Example 101, which has a specified (meth)acrylic-modified polyorganosiloxane content of less than 0.1 mass%, the topcoat-film-equipped cured image has degraded wear resistance.

In Comparative Example 102, which has a specified (meth)acrylic-modified polyorganosiloxane content of more than 5.0 mass%, the topcoat liquid has degraded IJ ejection stability.

In Comparative Examples 103 and 104, which employ, instead of the specified (meth)acrylic-modified polyorganosiloxane, a polyether-modified polyorganosiloxane or a silicone polyether acrylate, the topcoat-film-equipped cured images have degraded wear resistance.

The entire contents disclosed by JP2015-248005 filed in the Japan Patent Office on December 18, 2015 are incorporated herein by reference.

All documents, patent applications, and technical standards mentioned in this Specification are incorporated herein by reference to the same extent as in the case where the individual documents, patent applications, and technical standards are specifically and individually described as being incorporated herein by reference.

## Claims

1. An ink-jet-printer liquid composition comprising an organic solvent; a polymerizable compound having a weight-average molecular weight of from 1000 to 30000; a (meth)acrylic-modified polyorganosiloxane that has no polymerizable groups, that is a copolymer of a (meth)acrylate and a reactive polysiloxane having at least one of a polymerizable group or a mercapto group, and that has a weight-average molecular weight of from 20000 to 400000; and a photopolymerization initiator,
wherein a content of the organic solvent relative to a total amount of the liquid composition is from 40 mass% to 80 mass%, and
a content of the (meth)acrylic-modified polyorganosiloxane relative to the total amount of the liquid composition is from 0.1 mass% to 5.0 mass%.

2. The ink-jet-printer liquid composition according to claim 1, wherein the polymerizable compound is a bifunctional acrylate compound.

3. The ink-jet-printer liquid composition according to claim 1 or claim 2, wherein a content of the polymerizable compound relative to the total amount of the liquid composition is from 5 mass% to 40 mass%.

4. The ink-jet-printer liquid composition according to any one of claim 1 to claim 3, further comprising particles formed of the (meth)acrylic-modified polyorganosiloxane, wherein the particles have a volume-average primary particle diameter of 0.01 µm or more and 0.3 µm or less.

5. The ink-jet-printer liquid composition according to any one of claim 1 to claim 4, wherein the reactive polysiloxane is at least one compound represented by Formula (I) below: 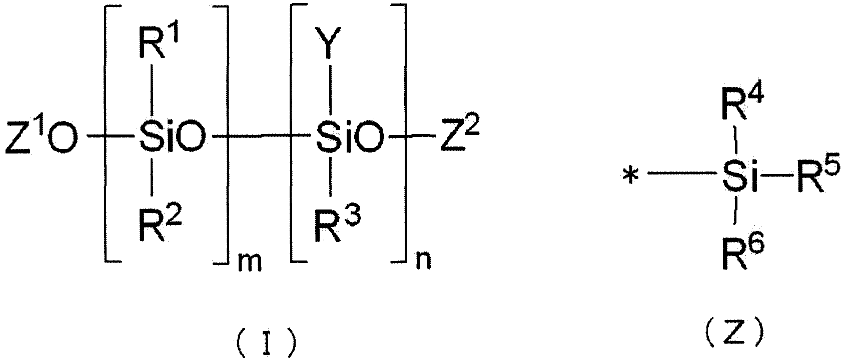 wherein, in Formula (I), R¹, R², and R³ each independently represent a hydrocarbon group having 1 to 20 carbon atoms, a halogenated hydrocarbon group having 1 to 20 carbon atoms, or a hydrocarbonoxy group having 1 to 20 carbon atoms, Y represents an organic group having at least one of a polymerizable group or a mercapto group, Z¹ and Z² each independently represent a hydrogen atom, an alkyl group having 1 to 10 carbon atoms, or a group represented by Formula (Z), m represents an integer of 1 to 10000, and n represents an integer of 1 or more, and
in Formula (Z), R⁴ and R⁵ each independently represent a hydrocarbon group having 1 to 20 carbon atoms, a halogenated hydrocarbon group having 1 to 20 carbon atoms, or a hydrocarbonoxy group having 1 to 20 carbon atoms, R⁶ represents a hydrocarbon group having 1 to 20 carbon atoms, a halogenated hydrocarbon group having 1 to 20 carbon atoms, a hydrocarbonoxy group having 1 to 20 carbon atoms, or an organic group having at least one of a polymerizable group or a mercapto group, and * represents a point of attachment.

6. The ink-jet-printer liquid composition according to claim 5, wherein Y in Formula (I) above represents a mercaptoalkyl group having 1 to 20 carbon atoms, and
R⁶ in Formula (Z) above represents a hydrocarbon group having 1 to 20 carbon atoms, a halogenated hydrocarbon group having 1 to 20 carbon atoms, a hydrocarbonoxy group having 1 to 20 carbon atoms, or a mercaptoalkyl group having 1 to 20 carbon atoms.

7. The ink-jet-printer liquid composition according to any one of claim 1 to claim 6, wherein the (meth)acrylate is at least one compound represented by Formula (II) below: 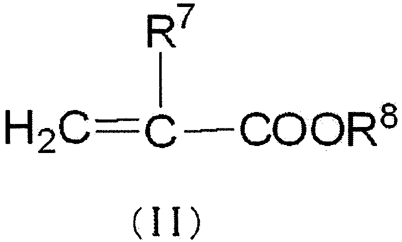 in Formula (II), R⁷ represents a hydrogen atom or a methyl group, R⁸ represents an alkyl group having 1 to 20 carbon atoms, an alkoxyalkyl group having 2 to 20 carbon atoms, a hydroxyalkyl group having 1 to 20 carbon atoms, a cycloalkyl group having 3 to 20 carbon atoms, or an aryl group having 6 to 20 carbon atoms.

## Patentansprüche

1. Flüssige Tintenstrahldruckerzusammensetzung umfassend
- ein organisches Lösungsmittel;
- eine polymerisierbare Verbindung mit einem gewichtsgemittelten Molekulargewicht von 1000 bis 30000;
- ein (Meth)acryl-modifiziertes Polyorganosiloxan, das keine polymerisierbaren Gruppen umfasst, das ein Copolymer eines (Meth)acrylats und eines reaktiven Polysiloxans mit einer polymerisierbaren Gruppe und/oder einer Mercaptogruppe ist, und das ein gewichtsgemitteltes Molekulargewicht von 20000 bis 400000 hat; und
- einen Photopolymerisationsinitiator,
wobei ein Gehalt an dem organischen Lösungsmittel, bezogen auf eine Gesamtmenge an der flüssigen Zusammensetzung von 40 Masse% bis 80 Masse% beträgt, und
ein Gehalt an dem (Meth)acryl-modifizierten Polyorganosiloxan, bezogen auf die Gesamtmenge an der flüssigen Zusammensetzung von 0,1 Masse% bis 5,0 Masse% beträgt.

2. Flüssige Tintenstrahldruckerzusammensetzung nach Anspruch 1, wobei die polymerisierbare Verbindung eine bifunktionale Acrylatverbindung ist.

3. Flüssige Tintenstrahldruckerzusammensetzung nach Anspruch 1 oder Anspruch 2, wobei ein Gehalt an der polymerisierbaren Verbindung, bezogen auf den Gesamtgehalt an der flüssigen Zusammensetzung von 5 Masse% bis 40 Masse% beträgt.

4. Flüssige Tintenstrahldruckerzusammensetzung nach einem der Ansprüche 1 bis 3, ferner umfassend Partikel, gebildet aus dem (Meth)acryl-modifizierten Polyorganosiloxan, wobei die Partikel einen volumendurchschnittlichen Primärpartikeldurchmesser von 0,01 µm oder mehr und 0,3 µm oder weniger aufweisen.

5. Flüssige Tintenstrahldruckerzusammensetzung nach einem der Ansprüche 1 bis 4, wobei das reaktive Polysiloxan mindestens eine durch die nachstehende Formel (I) dargestellte Verbindung ist: 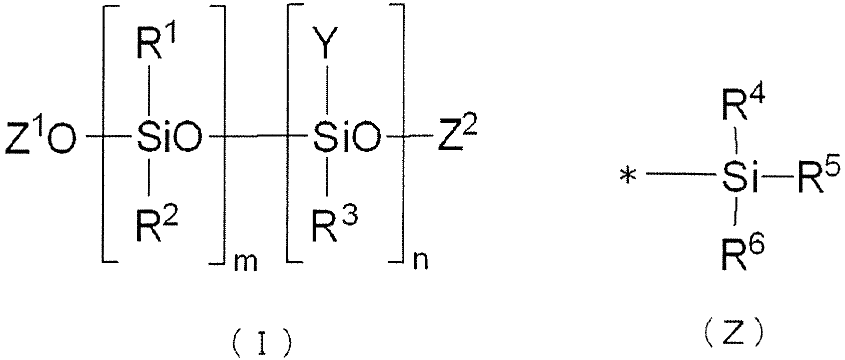 wobei in Formel (I), R¹, R² und R³ jeweils unabhängig eine Kohlenwasserstoffgruppe mit 1 bis 20 Kohlenstoffatomen, eine halogenierte Kohlenwasserstoffgruppe mit 1 bis 20 Kohlenstoffatomen oder eine sauerstoffhaltige Kohlenwasserstoffgruppe mit 1 bis 20 Kohlenstoffatomen darstellen, Y eine organische Gruppe mit einer polymerisierbaren Gruppe und/oder einer Mercaptogruppe darstellt, Z¹ und Z² jeweils unabhängig ein Wasserstoffatom, eine Alkylgruppe mit 1 bis 10 Kohlenstoffatomen oder eine durch Formel (Z) dargestellt Gruppe darstellen, wobei m eine ganze Zahl von 1 bis 10000 darstellt und n eine ganze Zahl von 1 oder mehr darstellt, und
in Formel (Z), R⁴ und R⁵ jeweils unabhängig eine Kohlenwasserstoffgruppe mit 1 bis 20 Kohlenstoffatomen, eine halogenierte Kohlenwasserstoffgruppe mit 1 bis 20 Kohlenstoffatomen oder eine sauerstoffhaltige Kohlenwasserstoffgruppe mit 1 bis 20 Kohlenstoffatomen darstellen, R⁶ eine Kohlenwasserstoffgruppe mit 1 bis 20 Kohlenwasserstoffatomen, eine halogenierte Kohlenwasserstoffgruppe mit 1 bis 20 Kohlenstoffatomen, eine sauerstoffhaltige Kohlenwasserstoffgruppe mit 1 bis 20 Kohlenstoffatomen oder eine organische Gruppe darstellt, die eine polymerisierbare Gruppe und/oder eine Mercaptogruppe aufweist, und * einen Bindungspunkt darstellt.

6. Flüssige Tintenstrahldruckerzusammensetzung nach Anspruch 5, wobei Y in obiger Formel (I) eine Mercaptoalkylgruppe mit 1 bis 20 Kohlenstoffatomen darstellt und
R⁶ in obiger Formel (Z) eine Kohlenwasserstoffgruppe mit 1 bis 20 Kohlenstoffatomen, eine halogenierte Kohlenwasserstoffgruppe mit 1 bis 20 Kohlenstoffatomen, eine sauerstoffhaltige Kohlenwasserstoffgruppe mit 1 bis 20 Kohlenstoffatomen oder eine Mercaptoalkylgruppe mit 1 bis 20 Kohlenstoffatomen darstellt.

7. Flüssige Tintenstrahldruckerzusammensetzung nach Anspruch 6, wobei das (Meth)acrylat mindestens eine durch nachstehende Formel (II) dargestellte Verbindung ist: 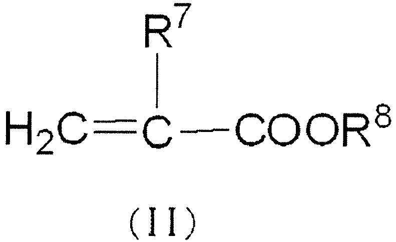 wobei in Formel (II), R⁷ ein Wasserstoffatom oder eine Methylgruppe darstellt, R⁸ eine Alkylgruppe mit 1 bis 20 Kohlenstoffatomen, eine Alkoxyalkylgruppe mit 2 bis 20 Kohlenstoffatomen, eine Hydroxyalkylgruppe mit 1 bis 20 Kohlenstoffatomen, eine Cycloalkylgruppe mit 3 bis 20 Kohlenstoffatomen oder eine Arylgruppe mit 6 bis 20 Kohlenstoffatomen darstellt.

## Revendications

1. Composition liquide pour imprimante à jet d'encre, comprenant un solvant organique, un composé polymérisable présentant un poids moléculaire moyen en poids allant de 1000 à 30000, un polyorganosiloxane à modification (méth)acrylique présentant des groupes non polymérisables, lequel est un copolymère d'un (méth)acrylate et d'un polysiloxane réactif présentant au moins un élément parmi un groupe polymérisable ou un groupe mercapto, et lequel présente un poids moléculaire moyen en poids allant de 20 000 à 400 000, et un initiateur de photopolymérisation,
dans laquelle une teneur du solvant organique par rapport à une quantité totale de la composition liquide s'étend de 40 % en masse à 80 % en masse, et
une teneur du polyorganosiloxane à modification (méth)acrylique par rapport à la quantité totale de la composition liquide s'étend de 0,1 % en masse à 5,0 % en masse.

2. Composition liquide pour imprimante à jet d'encre selon la revendication 1, dans laquelle le composé polymérisable est un composé acrylate bifonctionnel.

3. Composition liquide pour imprimante à jet d'encre selon la revendication 1 ou 2, dans laquelle une teneur du composé polymérisable par rapport à la quantité totale de la composition liquide s'étend de 5 % en masse à 40 % en masse.

4. Composition liquide pour imprimante àjet d'encre selon l'une quelconque des revendications 1 à 3, comprenant en outre des particules formées du polyorganosiloxane à modification (méth)acrylique, dans laquelle les particules présentent un diamètre de particules primaires moyen en volume supérieur ou égal à 0,01 µm et inférieur ou égal à 0,3 µm.

5. Composition liquide pour imprimante à jet d'encre selon l'une quelconque des revendications 1 à 4, dans laquelle le polysiloxane réactif est au moins un composé représenté par la Formule (I) ci-dessous : 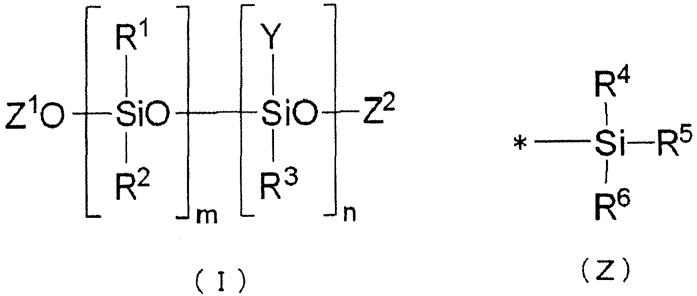 dans laquelle dans la formule (I), R¹, R², et R³ représentent chacun indépendamment un groupe hydrocarboné présentant de 1 à 20 atomes de carbone, un groupe hydrocarboné halogéné présentant de 1 à 20 atomes de carbone, ou un groupe hydrocarbonoxy présentant de 1 à 20 atomes de carbone ; Y représente un groupe organique présentant au moins un élément parmi un groupe polymérisable ou un groupe mercapto ; Z¹ et Z² représentent chacun indépendamment un atome d'hydrogène, un groupe alkyle présentant de 1 à 10 atomes de carbone, ou un groupe représenté par la formule (Z) ; m représente un entier de 1 à 10 000, et n représente un entier supérieur ou égal à un, et
dans la formule (Z), R⁴ et R⁵ représentent chacun indépendamment un groupe hydrocarboné présentant de 1 à 20 atomes de carbone, un groupe hydrocarboné halogéné présentant de 1 à 20 atomes de carbone, ou un groupe hydrocarbonoxy présentant de 1 à 20 atomes de carbone ; R⁶ représente un groupe hydrocarboné présentant de 1 à 20 atomes de carbone, un groupe hydrocarboné halogéné présentant de 1 à 20 atomes de carbone, un groupe hydrocarbonoxy présentant de 1 à 20 atomes de carbone, ou un groupe organique présentant au moins un élément parmi un groupe polymérisable ou un groupe mercapto, et * représente un point de fixation.

6. Composition liquide pour imprimante à jet d'encre selon la revendication 5, dans laquelle Y dans la formule (I) ci-dessus représente un groupe mercaptoalkyle présentant de 1 à 20 atomes de carbone, et
R⁶, dans la formule (Z), ci-dessus représente un groupe hydrocarboné présentant de 1 à 20 atomes de carbone, un groupe hydrocarboné halogéné présentant de 1 à 20 atomes de carbone, un groupe hydrocarbonoxy présentant de 1 à 20 atomes de carbone, ou un groupe mercaptoalkyle présentant de 1 à 20 atomes de carbone.

7. Composition liquide pour imprimante à jet d'encre selon l'une quelconque des revendications 1 à 6, dans laquelle le (méth)acrylate est au moins un composé représenté par la formule (II) ci-dessous : 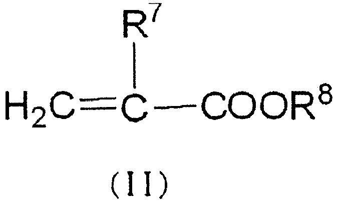 dans la formule (II), R⁷ représente un atome d'hydrogène ou un groupe méthyle ; R⁸ représente un groupe alkyle présentant de 1 à 20 atomes de carbone, un groupe alkoxyalkyle présentant de 2 à 20 atomes de carbone, un groupe hydroxyalkyle présentant de 1 à 20 atomes de carbone, un groupe cycloalkyle présentant de 3 à 20 atomes de carbone, ou un groupe aryle présentant de 6 à 20 atomes de carbone.
